# EUROPÄISCHE PATENTSCHRIFT

(11) **EP 3 911 575 B1**
(45) Veröffentlichungstag und Bekanntmachung des Hinweises auf die Patenterteilung: **22.05.2024**
(21) Anmeldenummer: 20701025.7
(22) Anmeldetag: 16.01.2020
(51) Int. Cl.: B65C 9/18, B22F 10/20, B33Y 80/00, B22F 5/10

(54) **VAKUUMTROMMEL FÜR EIN ETIKETTIERAGGREGAT, ETIKETTIERAGGREGAT MIT EINER SOLCHEN VAKUUMTROMMEL SOWIE VERFAHREN ZUR HERSTELLUNG EINER VAKUUMTROMMEL**
VACUUM DRUM FOR A LABELING UNIT, LABELING UNIT HAVING SUCH VACUUM DRUM AND METHOD FOR PRODUCING A VACUUM DRUM
TAMBOUR SOUS VIDE POUR UNITÉ D'ÉTIQUETAGE, UNITÉ D'ÉTIQUETAGE MUNIE D'UN TEL TAMBOUR SOUS VIDE, ET PROCÉDÉ DE FABRICATION D'UN TAMBOUR SOUS VIDE

(30) Priorität: 18.01.2019 DE 102019101301
(43) Veröffentlichungstag der Anmeldung: 24.11.2021
(73) Patentinhaber: KHS GmbH, 44143 Dortmund (DE)
(72) Erfinder: ESSING, Jens, 44143 Dortmund (DE); KRAEMER, Klaus, 44267 Dortmund (DE)
(86) Internationale Anmeldenummer: PCT/EP2020/051010
(87) Internationale Veröffentlichungsnummer: WO 2020/148375

(56) Entgegenhaltungen:
- WO-A2-2007/110199
- DE-A1-102007 023 519
- DE-A1-102008 053 513
- DE-A1-102016 207 824
- DE-U1-202010 013 950
- DE-U1-202016 105 825
- DE-U1-202016 107 328
- US-A1- 2014 209 247
- US-A1- 2017 166 344

## Beschreibung

Die Erfindung bezieht sich auf eine Vakuumtrommel für ein Etikettieraggregat gemäß Oberbegriff Patentanspruch 1. Weiterhin betrifft die vorliegende Erfindung ein Etikettieraggregat mit einer solchen Vakuumtrommel sowie ein Verfahren zur Herstellung einer derartigen Vakuumtrommel gemäß Oberbegriff Patentanspruch 15.

Vakuumtrommeln für die Verwendung bei Etikettieraggregaten einer Etikettiermaschine, beispielsweise für Etikettiermaschinen, die für eine sogenannte Rundum-Etikettierung ausgebildet sind, sind dem Fachmann seit langem bekannt.

Grundsätzlich dienen derartige Vakuumtrommeln u.a. dazu, die Etiketten mit einem in Dreh- oder Umlaufrichtung der Vakuumtrommel beim Etikettieren vorderen oder vorauseilenden Etikettenende (Etikettenkante oder -seite) an den jeweiligen, an dem Etikettieraggregat vorbeibewegtem Behälter aufzubringen, an den dann anschließend das Etikett z.B. durch Drehen des Behälters um seine vertikale Behälterachse vollständig angelegt und von der Vakuumtrommel abgenommen wird.

An der Vakuumtrommel sind die Etiketten jeweils an ihrem vorauseilenden Etikettenende sowie an ihrem rückwärtigen oder nacheilenden Etikettenende an einem Vakuumhalter bzw. einem Vakuumpad gehalten. Der Abstand, den die einander zugeordneten Vakuumhalter für das vorauseilende Etikettenende und das nacheilende bzw. nachgeführte Etikettenende an der in der Regel kreiszylinderförmigen Umfangsfläche der Vakuumtrommel aufweisen, entspricht somit im Wesentlichen der Länge der verarbeiteten Etiketten. In der Regel sind am Umfang einer Vakuumtrommel mehrere Vakuumhalter für das vordere Etikettenende mit jeweils einem zugehörigen Vakuumhalter für das rückwärtige Etikettenende vorgesehen, so dass bei einer vollen Umdrehung der Vakuumtrommel jeweils mehrere Etiketten an mehrere Behälter übertragen werden können.

Die Vakuumhalter sind dabei leistenartig ausgebildet und in einer Achsrichtung parallel oder im Wesentlichen parallel zur Trommelachse orientierten Teilbereich mit einer Vielzahl von Vakuumöffnungen ausgebildet, die über im Vakuumpad vorgesehene Bohrungen oder Kanäle mit trommelseitigen Vakuumkanälen in Verbindung stehen.

Dabei ist es aus dem Stand der Technik auch bekannt, die zum Ansaugen der seitlichen Anfangs- und Endbereiche der Etiketten vorgesehenen Vakuumhalter an der Vakuumtrommel schaltbar auszubilden. Hierfür sind die Vakuumhalten dann aus einer äußeren Arbeitsposition, in der die Vakuumhalter den von ihnen gehalten Etikettenabschnitt gegen ein in der Peripherie der Vakuumtrommel vorgesehenes Leimwerk führen, selektiv in eine innere Warteposition schaltbar, in der sie das Leimwerk nicht berühren und vice versa.

Über den fixen Abstand zwischen den beiden Vakuumhaltern, die das rückwärtige sowie das vorauseilende Etikettenende eines Einzeletiketts halten, ist es notwendig, bei sich in der Länge ändernden Etikettentypen auch den Abstand der beiden Vakuumhalter anzupassen. Dies erfordert im Stand der Technik nicht nur einen Umbau der Vakuumtrommel, sondern auch eine Vorratshaltung von verschiedenen Segmenten mit unterschiedlichen Abständen zwischen den beiden Vakuumhaltern. Damit ist die Anpassung der Vakuumtrommel eines Etikettieraggregates einer Etikettiermaschine an unterschiedliche Etikettenformate zeitaufwändig und teuer.

Aus der Druckschrift WO 2007/110199 A2 ist eine Vakuumtrommel bekannt, die zur Verwendung in einer Etikettiermaschine ausgebildet ist und die wenigstens zwei an einer Umfangsfläche der Trommel um eine Trommelachse versetzte Vakuumhalter für ein vorderes und ein rückwärtiges Etikettenende aufweist. Ferner ist bei der Vakuumtrommel zur Anpassung an Etiketten unterschiedlicher Länge der Abstand zwischen den Vakuumhaltern durch Austauschen wenigstens eines zumindest einen Teil der Umfangsfläche bildenden Segments veränderbar.

Ferner ist aus der Druckschrift DE 10 2008 053 513 A1 ein Vakuumpad zur Verwendung an Vakuumtrommeln von Etikettieraggregaten zum Etikettieren von Flaschen oder dergleichen Behältern mit Etiketten bekannt. Das Vakuumpad ist mit einer Vielzahl von zumindest an einem Teilbereich des Vakuumpads vorgesehenen Vakuumöffnungen ausgestattet, die von mit einem Vakuum beaufschlagbaren Kanälen in dem wenigstens einen Teilbereich gebildet sind.

Ausgehend hiervon liegt der vorliegenden Erfindung die Aufgabe zu Grunde, eine Vakuumtrommel für ein Etikettieraggregat bereitzustellen, welche die vorgenannten Nachteile vermeidet und hierbei insbesondere einfach und kostengünstig an unterschiedliche Etikettenformate anpassbar ist.

Diese Aufgabe wird durch eine Vakuumtrommel für ein Etikettieraggregat einer Etikettiermaschine, insbesondere zum Etikettieren von Behälter mit den Merkmalen des Patentanspruches 1 gelöst. Ein Verfahren zur Herstellung einer derartigen Vakuumtrommel ist Gegenstand des nebengeordneten Patentanspruches 15. Die jeweiligen Unteransprüche betreffen dabei besonders bevorzugte Ausführungsvarianten der Erfindung.

Der wesentliche Aspekt der vorliegenden Erfindung besteht dabei darin, eine Vakuumtrommel für ein Etikettieraggregat einer Etikettiermaschine, insbesondere zum Etikettieren von Behälter oder dergleichen, anzugeben, aufweisend mehrere in einer Drehrichtung um eine Trommelachse der Vakuumtrommel rotierbare Segmente mit jeweils zumindest einem an einer entsprechenden Trägerplatte angeordneten Vakuumhalterpaar, welches zumindest zwei an einer Umfangsfläche der Vakuumtrommel um die Trommelachse in Drehrichtung versetzt zueinander vorgesehene Vakuumhalter mitjeweils einem Vakuumhaltergehäuse umfasst, wobei ein bezogen auf die Drehrichtung vorderer Vakuumhalter zum Halten eines jeweiligen vorderen Etikettenendes eines entsprechenden Etiketts und ein bezogen auf die Drehrichtung hinterer Vakuumhalter zum Halten eines zugehörigen rückwärtigen Etikettenendes an der Umfangsfläche der Vakuumtrommel vorgesehen sind, und wobei die Umfangsfläche des entsprechenden Segments der Vakuumtrommel zwischen dem jeweiligen vorderen und hinteren Vakuumhalter durch einen kreisbogenförmigen Segmentflächenabschnitt gebildet ist. Die erfindungsgemäße Vakuumtrommel zeichnet sich dabei insbesondere dadurch aus, dass zumindest die Trägerplatte und/oder das jeweilige Vakuumhaltergehäuse des Vakuumhalterpaares und/oder der sich zwischen dem vorderen und hinteren Vakuumhalter dieses Vakuumhalterpaares erstreckende Segmentflächenabschnitt wenigstens eines Segmentes mittels eines additiven Fertigungsverfahrens hergestellt ist.

Ferner ist erfindungsgemäß vorgesehen, dass zumindest ein Vakuumhaltergehäuse des Vakuumhalterpaares mittels zumindest einer Vakuumleitung an der Trägerplatte angeordnet ist, wobei die zumindest eine Vakuumleitung mittels eines additiven Fertigungsverfahrens hergestellt ist.

Gemäß einer weiteren vorteilhaften Ausführungsvariante kann dabei vorgesehen sein, dass das zumindest eine Vakuumhaltergehäuse des Vakuumhalterpaares mittels der zumindest einen Vakuumleitung monolithisch mit der Trägerplatte ausgebildet und an der Trägerplatte lagefixiert gehalten ist.

Gemäß einer nochmals weiteren vorteilhaften Ausführungsvariante kann dabei vorgesehen sein, dass der sich zwischen dem vorderen und hinteren Vakuumhalter dieses Vakuumhalterpaares erstreckende Segmentflächenabschnitt des wenigstens einen Segments mittels zumindest einer Vakuumleitung an der Trägerplatte angeordnet ist, wobei die zumindest eine Vakuumleitung mittels eines additiven Fertigungsverfahrens hergestellt ist.

Gemäß einer nochmals weiteren vorteilhaften Ausführungsvariante kann dabei vorgesehen sein, dass der sich zwischen dem vorderen und hinteren Vakuumhalter dieses Vakuumhalterpaares erstreckende Segmentflächenabschnitt des wenigstens einen Segments mittels der zumindest einen Vakuumleitung monolithisch mit der Trägerplatte ausgebildet und an der Trägerplatte lagefixiert gehalten ist.

Gemäß einer nochmals weiteren vorteilhaften Ausführungsvariante kann dabei vorgesehen sein, dass die zumindest eine Vakuumleitung zwischen der Trägerplatte und dem zumindest einem Vakuumhaltergehäuse einen inneren Leitungsverlauf aufweist, bei dem sämtliche Kurvenabschnitte einen tangentialen Übergang ausbilden.

Gemäß einer nochmals weiteren vorteilhaften Ausführungsvariante kann dabei vorgesehen sein, dass die zumindest eine Vakuumleitung zwischen der Trägerplatte und dem sich zwischen dem vorderen und hinteren Vakuumhalter dieses Vakuumhalterpaares erstreckende Segmentflächenabschnitt einen inneren Leitungsverlauf aufweist, bei dem sämtliche Kurvenabschnitte einen tangentialen Übergang ausbilden.

Gemäß einer nochmals weiteren vorteilhaften Ausführungsvariante kann dabei vorgesehen sein, dass ein Innendurchmesser der zumindest eine Vakuumleitung entlang des Leitungsverlauf derart eingestellt ist, dass an einem dem vorderen oder hinteren Vakuumhalter und/oder dem sich zwischen dem vorderen und hinteren Vakuumhalter dieses Vakuumhalterpaares erstreckenden Segmentflächenabschnitt zugewandten Ausgang der zumindest einen Vakuumleitung ein identischer Unterdruck anliegt.

Gemäß einer nochmals weiteren vorteilhaften Ausführungsvariante kann dabei vorgesehen sein, dass zwischen zumindest zwei Vakuumkanälen und/oder dem Segmentflächenabschnitt und der Trägerplatte und/oder zumindest einem Vakuumkanal und der Trägerplatte zumindest eine Verstrebung vorgesehen ist, die mittels eines additiven Fertigungsverfahrens hergestellt ist.

Gemäß einer nochmals weiteren vorteilhaften Ausführungsvariante kann dabei vorgesehen sein, dass zwischen dem Segmentflächenabschnitt und der Trägerplatte zumindest eine vertikal zu einer durch die Trägerplatte aufgespannten Ebene orientierte Verstrebung vorgesehen ist, in die vorzugsweise zumindest ein Vakuumkanal integriert ist.

Gemäß einer nochmals weiteren vorteilhaften Ausführungsvariante kann dabei vorgesehen sein, dass zumindest eine vertikale Verstrebung als Finne ausgebildet ist.

Gemäß einer nochmals weiteren vorteilhaften Ausführungsvariante kann dabei vorgesehen sein, dass mehrere vertikal verlaufende Verstrebungen vorgesehen sind, zwischen den sich zumindest eine horizontal und damit parallel zu der durch die Trägerplatte ausgespannten Ebene verlaufende Verstrebung erstreckt.

Gemäß einer nochmals weiteren vorteilhaften Ausführungsvariante kann dabei vorgesehen sein, dass die Vakuumkanäle in eine als Mantelflächenabschnitt ausgebildete Verstrebung integriert sind.

Gemäß einer nochmals weiteren vorteilhaften Ausführungsvariante kann dabei vorgesehen sein, dass das zumindest eine Vakuumhaltergehäuse des Vakuumhalterpaares mittels zumindest einer Verstelleinrichtung an dem sich zwischen dem vorderen und hinteren Vakuumhalter dieses Vakuumhalterpaares erstreckenden Segmentflächenabschnitt relativ zur Trommelachse verstellbar angeordnet ist.

Gemäß einer nochmals weiteren vorteilhaften Ausführungsvariante kann dabei vorgesehen sein, dass der sich zwischen dem vorderen und hinteren Vakuumhalter dieses Vakuumhalterpaares erstreckende Segmentflächenabschnitt mehrteilig, insbesondere zweiteilig ausgebildet ist und zumindest einen ersten sowie zweiten Teilsegmentflächenabschnitt aufweist.

Gemäß einer nochmals weiteren vorteilhaften Ausführungsvariante kann dabei vorgesehen sein, dass zwischen dem ersten und zweiten Teilsegmentflächenabschnitt ein Schlaufenschacht vorgesehen ist, mittels dem die wirksame Kreissegmentbogenlänge des Segmentflächenabschnittes, an dem das Etikett anliegt, veränderbar ist.

Gemäß einer nochmals weiteren vorteilhaften Ausführungsvariante kann dabei vorgesehen sein, dass mehrere Segmente, vorzugsweise sämtliche Segmente, der Vakuumtrommel gemäß einem der vorgehenden Ausführungen ausgebildet sind. Gemäß einer nochmals weiteren vorteilhaften Ausführungsvariante kann dabei vorgesehen sein, dass sämtliche Segmente eines Etikettentyps eine identische Codierung aufweisen.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen. Weiterbildungen, Vorteile und Anwendungsmöglichkeiten der Erfindung ergeben sich auch aus der nachfolgenden Beschreibung von Ausführungsbeispielen und aus den Figuren.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block- oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparates) wie z. B. einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die Erfindung wird im Folgenden anhand der Figuren an Ausführungsbeispielen näher erläutert. Es zeigen:
- Fig. 1: in schematischer Darstellung und in Draufsicht ein Etikettieraggregat einer Etikettiermaschine zum Etikettieren von Behältern gemäß dem Stand der Technik,
- Fig. 2: in schematischer Perspektivansicht von schräg oben, eine freigestellte Vakuumtrommel gemäß dem Stand der Technik,
- Fig. 3: in schematischer Perspektivansicht eine beispielhafte Ausführungsvariante eines freigestellten Segments einer erfindungsgemäßen Vakuumtrommel,
- Fig. 4: in schematischer Perspektivansicht eine weitere beispielhafte Ausführungsvariante eines freigestellten Segments einer erfindungsgemäßen Vakuumtrommel,
- Fig. 5a und 5b: in jeweils schematischer Perspektivansicht eine nochmals weitere beispielhafte Ausführungsvariante eines freigestellten Segments einer erfindungsgemäßen Vakuumtrommel,
- Fig. 6: in schematischer Perspektivansicht eine nochmals weitere beispielhafte Ausführungsvariante eines freigestellten Segments einer erfindungsgemäßen Vakuumtrommel,
- Fig. 7: in schematischer Perspektivansicht eine beispielhafte Ausführungsvariante freigestellter Vakuumleitungen für ein Segment einer erfindungsgemäßen Vakuumtrommel,
- Fig. 8: in schematischer Draufsicht die Anbindung eines Vakuumhalters an einen Segmentflächenabschnitt eines Segments,
- Fig. 9: in schematischer Perspektivansicht die Anbindung eines Vakuumhalters an einen Segmentflächenabschnitt eines Segments,
- Fig. 10: in schematisch seitlichen Schnittdarstellung eine Ausführungsvariante eines Segments einer erfindungsgemäßen Vakuumtrommel,
- Fig. 11: in schematischer Draufsicht eine nochmals weitere beispielhafte Ausführungsvariante eines freigestellten Segments einer erfindungsgemäßen Vakuumtrommel,
- Fig. 12: in schematischer Draufsicht eine nochmals weitere beispielhafte Ausführungsvariante eines freigestellten Segments einer erfindungsgemäßen Vakuumtrommel, und
- Fig. 13: in schematischer Draufsicht eine nochmals weitere beispielhafte Ausführungsvariante eines freigestellten Segments einer erfindungsgemäßen Vakuumtrommel, und
- Fig. 14: in schematischer Perspektivansicht eine nochmals weitere beispielhafte Ausführungsvariante eines freigestellten Segments einer erfindungsgemäßen Vakuumtrommel.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind. Auch ist die Erfindung in den Figuren nur als schematische Ansicht zur Erläuterung der Arbeitsweise dargestellt. Insbesondere dienen die Darstellungen in den Figuren nur der Erläuterung des grundlegenden Prinzips der Erfindung. Aus Gründen der Übersichtlichkeit ist darauf verzichtet worden, alle Bestandteile der Vorrichtung zu zeigen.

In den Figuren ist 1 und 2 ist ein Etikettieraggregat einer Etikettiermaschine zum Etikettieren von Flaschen oder dergleichen Behältern 2 mit sogenannten Roll-Fed-Etiketten 3 gemäß dem Stand der Technik gezeigt, bei dem die Etiketten 3 von einer Vorratsrolle 4 eines endlosen, bandförmigen Etikettenmaterials 3a abgezogen und in einem Schneidwerk 5 des Etikettieraggregates 1 mit der jeweiligen, für ein Etikett 3 benötigten Länge von dem Etikettenmaterial 3a abgeschnitten werden. Die so erhaltenen Etiketten 3 werden über eine Vakuumtrommel 6, die als Etikettier- und Übergabetrommel ausgebildet ist, an die Behälter 2, die auf einem um eine vertikale Maschinenachse umlaufenden Rotor 7 der Etikettiermaschine an dem Etikettieraggregat 1 vorbeibewegt werden, übergeben und auf die Behälter 2 aufgebracht, wo weiter untenstehend noch nähergehend im Detail erläutert wird. Die Drehrichtungen des Rotors 7 und der Vakuumtrommel 6 sind mit den Pfeilen A bzw. B angegeben.

Das Etikettenmaterial 3a wird von einer Vorratsrolle 4 mittels Förderwalzen synchron mit der Drehbewegung des Rotors 7 abgezogen und dem Schneidwerk 5 zugeführt. Das Schneidwerk 5 umfasst insbesondere eine Schneidtrommel 12, die beim Etikettieren um ihre vertikale Trommelachse umlaufend angetrieben ist, und zwar gegensinnig zu der Drehrichtung B der Vakuumtrommel 6 (Pfeil C).

Mehr im Detail besteht die Etikettiermaschine hierfür in der bekannten Weise aus einem um eine vertikale Maschinenachse in Richtung des Pfeils A umlaufend angetriebenen Rotor 7 mit einer Vielzahl von am Umfang des Rotors 7 vorgesehenen und von Drehtellern 8 gebildeten Standflächen für jeweils einen Behälter 2. Die zu etikettierenden Behälter 2 werden dem Rotor 7 über einen nicht dargestellten Transporteur an einem Flascheneinlauf so zugeführt, dass jeweils ein Behälter 2 auf einem Drehteller 8 aufrechtstehend, d. h. mit einer Behälterhochachse in vertikaler Richtung orientiert angeordnet ist. Mit dem Rotor 7 werden die Behälter 2 u. a. an einem Etikettieraggregat 1 vorbeibewegt, an welchem jeweils ein an seiner Rückseite mit Leimaufträgen versehenes und am Umfang der Vakuumtrommel 6 gehaltenes Etikett mit einem vorauseilenden Etikettenende 3.1 an jeden vorbeibewegten Behälter 2 übergeben und anschließend durch Aufwickeln oder Anrollen unter Drehen des Behälters 2 und unter Abziehen des Etiketts 3 von der Vakuumtrommel 6 auf den Behälter 2 aufgebracht wird. Die etikettierten Behälter 2 werden an einem Behälter- oder Flaschenauslauf wieder an den Transporteur zum Abtransportieren weitergeleitet.

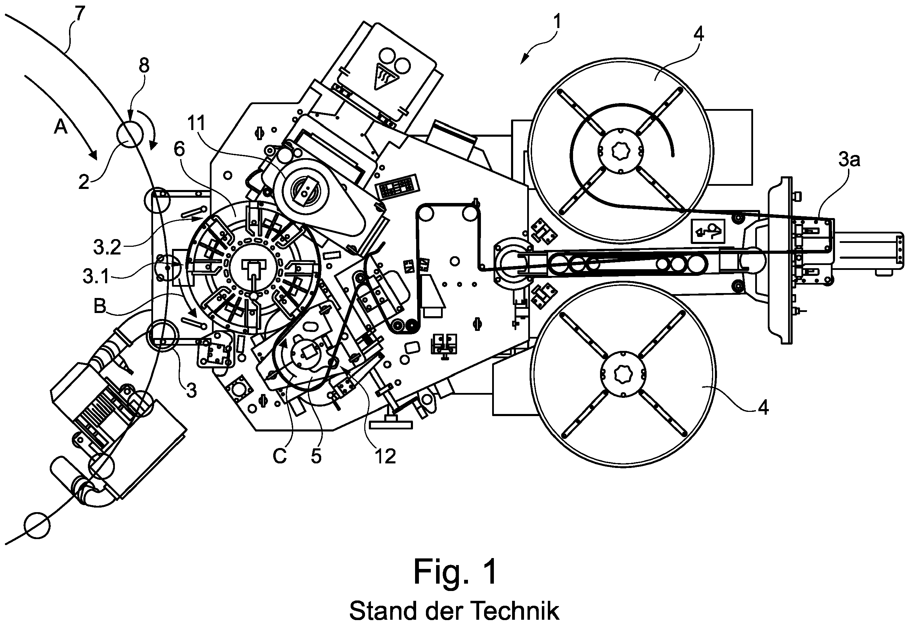

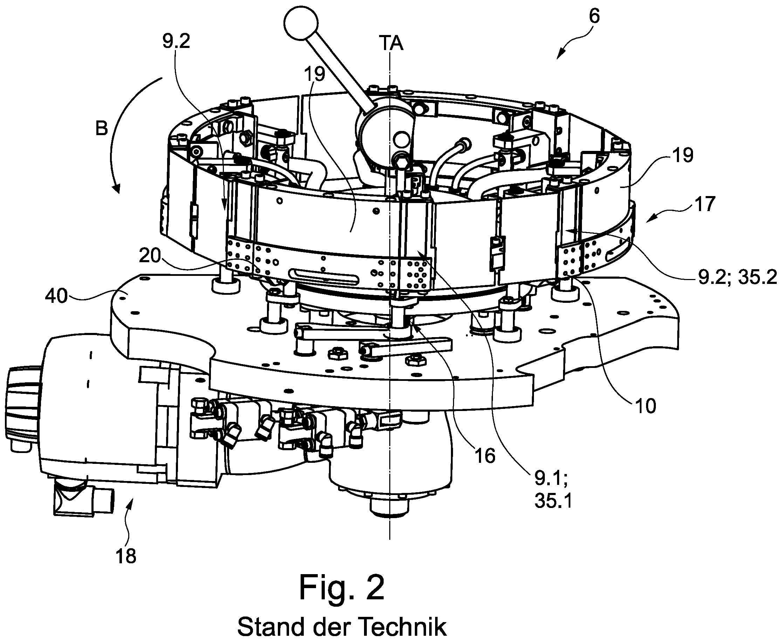

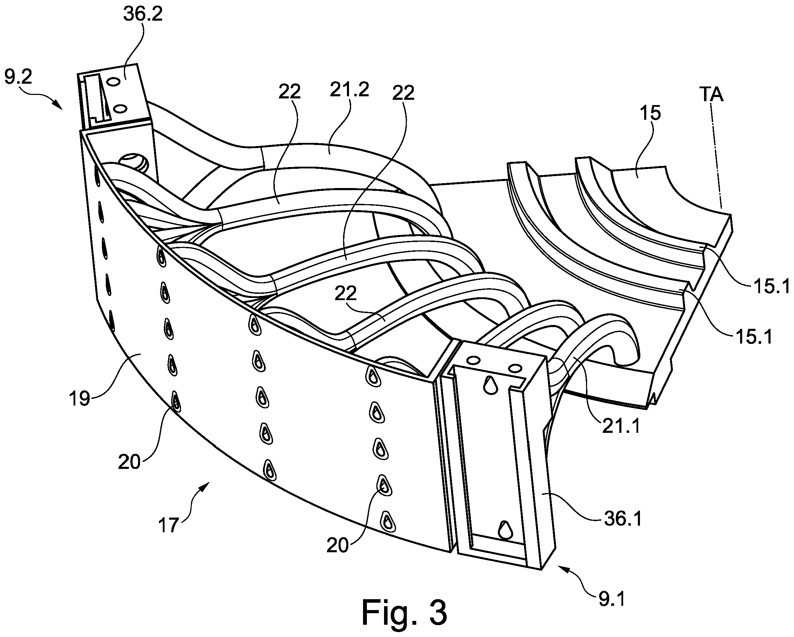

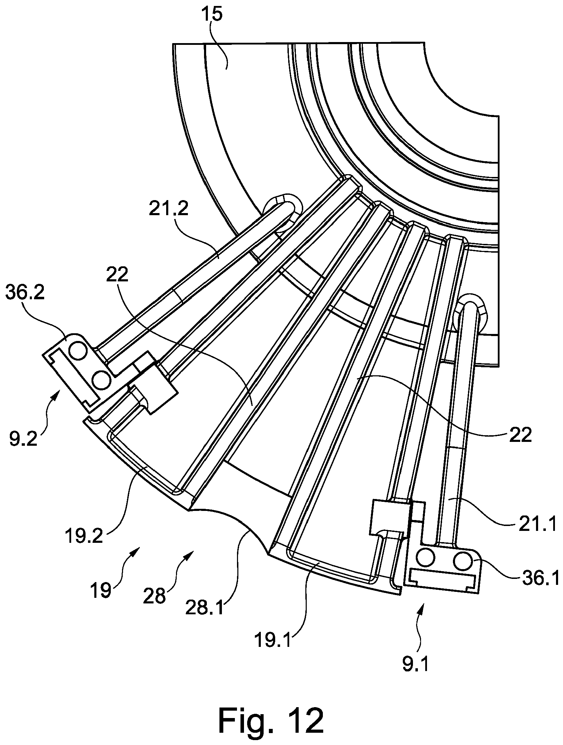

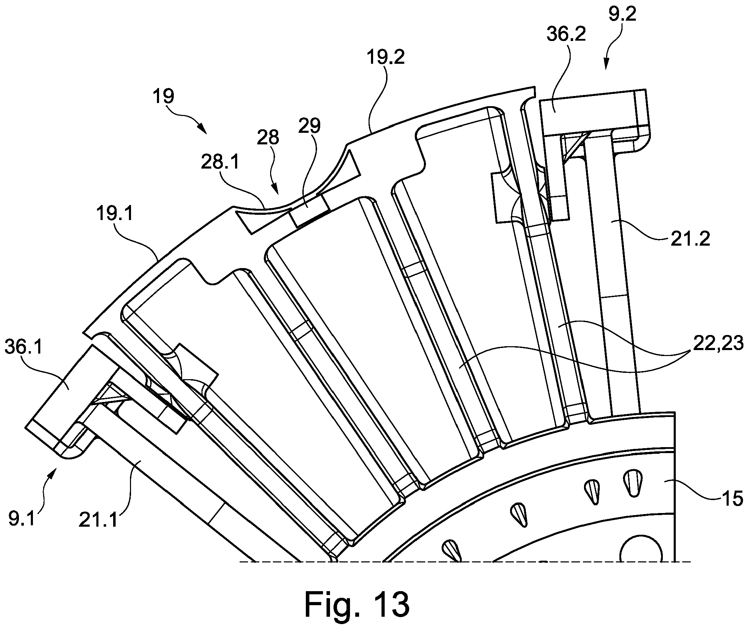

Diese im Zusammenhang der Figuren 1 und 2 beschriebenen Funktionalitäten und der Aufbau einer Etikettiermaschine sowie der darin verwendeten Vakuumtrommel 6 haben auch sämtlich Gültigkeit für die erfindungsgemäße Vakuumtrommel 6 gemäß den Figuren 3 bis 13, bei der zumindest zwei an einer Umfangsfläche der Vakuumtrommel 6 um die Trommelachse TA in Drehrichtung B versetzt zueinander vorgesehene Vakuumhalter 9.1, 9.2 mit jeweils einem Vakuumhaltergehäuse 36.1, 36.2 vorgesehen sind. Ferner ist die Umfangsfläche eines entsprechenden Segments 17 der Vakuumtrommel 6 zwischen dem jeweiligen vorderen und hinteren Vakuumhalter 9.1, 9.2 durch einen kreisbogenförmigen Segmentflächenabschnitt 19 gebildet ist.

Zum Halten der Etiketten 3 an der kreiszylinderförmigen Umfangsfläche eines Segments 17 der Vakuumtrommel 6, die um eine vertikale Trommelachse TA synchron mit dem Rotor 7, aber im entgegen gesetzten Drehsinn, d. h. in Richtung des Pfeils B angetrieben ist, sind zumindest zwei in Drehrichtung B der Vakuumtrommel 6 versetzte Vakuumhalter 9.1 und 9.2 mit am einem entsprechenden Vakuumpad 35.1, 35.2 ausgebildeten Vakuumöffnungen 10 vorgesehen, und zwar jeweils ein vorderer Vakuumhalter 9.1 zum Halten des jeweiligen Etiketts 3 an seinem in Drehrichtung B der Vakuumtrommel 6 vorauseilenden, vorderen Etikettenende 3.1 und ein hinterer Vakuumhalter 9.2 zum Halten jedes Etiketts 3 an dem bezogen auf die Drehrichtung B der Vakuumtrommel 6 nachgeführten, rückwärtigen Etikettenendes 3.2. Der vorderer und hintere Vakuumhalter 9.1 und 9.2 bilden ein Vakuumhalterpaar 9 und sind in einem Bogenabstand, der gleich der Länge eines Etiketts 3 entspricht, zueinander um die Trommelachse TA in Drehrichtung B versetzt vorgesehen. In anderen Worten sind also ein bezogen auf die Drehrichtung B vorderer Vakuumhalter 9.1 zum Halten eines jeweiligen vorderen Etikettenendes 3.1 eines entsprechenden Etiketts 3 und ein bezogen auf die Drehrichtung B hinterer Vakuumhalter 9.2 zum Halten eines zugehörigen rückwärtigen Etikettenendes 3.2 an der Umfangsfläche der Vakuumtrommel 6 vorgesehen.

Dabei werden die Etiketten 3 von einem bahnförmigen Etikettenmaterial 3a, welches auf der Vorratsspule 4 aufgewickelt ist, abgezogen und anschließend durch Abschneiden oder Abtrennen erzeugt. Genauer wird das Etikettenmaterial 3a hierfür dem Etikettieraggregat 1 über mehrere Rollen und mittels der motorisch angetriebenen Förderwalzen zugeführt und gelangt anschließend an das Schneidwerk 5, an dem die das jeweilige Etikett 3 bildende Länge von dem Etikettenmaterial 3a abgetrennt und an die Vakuumtrommel 6 übergeben wird. Insbesondere wird dabei ein über die Vakuumöffnungen 10 an einem entsprechenden Vakuumpad 35.1, 35.2 eines zugehörigen Vakuumhalters 9.1, 9.2 angesaugtes Etikett 3 kontaktschlüssig an einer am Leimwerk 11 vorhandenen Leimwalze vorbeigeführt. Mehr im Detail wird damit an den vorderen und rückwärtigen Etikettenenden 3.1, 3.2 eines Etiketts 3 mittels des Leimwerks 11 ein Leimauftrag während des Vorbeibewegens aufgebracht.

Nach einem wesentlichen Aspekt der erfindungsgemäßen Vakuumtrommel 6 ist nunmehr vorgesehen, dass zumindest die Trägerplatte 15 und/oder das jeweilige Vakuumhaltergehäuse 36.1, 36.2 des Vakuumhalterpaares 9 und/oder der sich zwischen dem vorderen und hinteren Vakuumhalter 9.1, 9.2 dieses Vakuumhalterpaares 9 erstreckende Segmentflächenabschnitt 19 wenigstens eines Segmentes 17 mittels eines additiven Fertigungsverfahrens hergestellt ist.

Die als Übergabetrommel ausgebildete Vakuumtrommel 6 kann dabei mehrteilig, beispielsweise 2, 3, 4, 5, 6, 7 oder 8-teilig, ausgebildet sein und hierbei mehrere um die Trommelachse TA angeordnete, vorzugsweise identisch zueinander ausgebildete Segmente 17 umfassen, wobei ein jedes Segment 17 seinerseits wiederum zumindest ein Vakuumhalterpaar 9 mit einem vorderen und hinteren Vakuumhalter 9.1, 9.2 aufweist.

Das jeweilige Segment 17 sieht hierfür die untere, vorzugsweise teilkreissegmentförmig ausgebildete Trägerplatte 15 vor, die zusammen mit den übrigen teilkreissegmentförmigen Trägerplatten 15 der weiteren Segmente 17 an einer die Vakuumtrommel 6 antreibenden und mit der Trommelachse TA zusammenfallenden, vertikalen Welle 16 angeordnet sind, wie das auch im Zusammenhang des in den Figuren 1 und 2 gezeigten Stand der Technik erfolgt. Dabei kann die Welle 16, wie im Stand der Technik, durch einen Grundträger 40 der Vakuumtrommel 6 hindurchführt sein und mittels einer unterhalb des Grundträgers 40, jedoch an diesem befestigen, Antriebseinrichtung 18 motorisch in Drehrichtung B angetrieben werden kann. Die Antriebseinrichtung 18 kann insbesondere als Elektromotor, besonders vorteilhaft als Servomotor ausgebildet sein. Letztlich ist der Grundträger 40 stationär feststehend ausgebildet und weist an seiner Unterseite wenigstens die Antriebseinrichtung 40 sowie oberhalb die jeweiligen Segmente 17 auf.

Mehr im Detail sind an der jeweiligen Trägerplatte 15 eines entsprechenden Segmentes 17 auch ein bezogen auf die Drehrichtung B vorderer Vakuumhalter 9.1 zum Halten eines jeweiligen vorderen Etikettenendes 3.1 eines zugehörigen Etiketts 3 und ein bezogen auf die Drehrichtung B hinterer Vakuumhalter 9.2 zum Halten dieses rückwärtigen Etikettenendes 3.2 an der Umfangsfläche der Vakuumtrommel 6 vorgesehen, insbesondere angeordnet.

Dabei ist der vordere und hintere Vakuumhalter 9.1, 9.2 mit seinem jeweiligen Vakuumhaltergehäuse 36.1, 36.2 mittels zumindest einer Vakuumleitung 21.1, 21.2 an der Trägerplatte 15 angeordnet ist, wobei die zumindest eine Vakuumleitung 21.1, 21.2 mittels eines additiven Fertigungsverfahrens hergestellt ist. Mehr im Detail ist das vordere Vakuumhaltergehäuse 36.1 mittels zumindest einer vorderen Vakuumleitung 21.1 und das hintere Vakuumhaltergehäuse 36.2 mittels zumindest einer hinteren Vakuumleitung 21.2 an der Trägerplatte 15 angeordnet. Indem die jeweilige Vakuumleitung 21.1, 21.2 mittels eines additiven Fertigungsverfahrens hergestellt ist, weist diese eine ausreichende mechanische Festigkeit auf, um das entsprechende Vakuumhaltergehäuse 36.1, 36.2 an der Trägerplatte 15 lagefixiert zu halten. Dabei kann auch vorgesehen sein, dass das entsprechende Vakuumhaltergehäuse 36.1, 36.2 mittels der zumindest Vakuumleitung 21.1, 21.2 monolithisch mit der Trägerplatte 15 ausgebildet ist. Hierbei sind also das vordere und/oder hintere Vakuumhaltergehäuse 36.1, 36.2, die zugehörige wenigstens eine Vakuumleitung 21.1, 21.2, sowie die Trägerplatte 15 mittels eines additiven Fertigungsverfahrens einstückig hergestellt.

Zwischen dem jeweiligen vorderen Vakuumhalter 9.1 und hinteren Vakuumhalter 9.2 ist ein die Umfangsfläche des Segmentes 17 in diesem Bogenabschnitt ausbildender kreisbogenförmiger Segmentflächenabschnitt 19 vorgesehen, der ebenfalls an der Trägerplatte 15 angeordnet ist. Auch hierfür kann vorgesehen sein, dass der jeweilige Segmentflächenabschnitt 19 des wenigstens einen Segments 17 mittels zumindest einer Vakuumleitung 22 an der Trägerplatte angeordnet ist, wobei die zumindest eine Vakuumleitung 22 mittels eines additiven Fertigungsverfahrens hergestellt ist. Indem die zumindest eine Vakuumleitung 22 mittels eines additiven Fertigungsverfahrens hergestellt ist, weist diese eine ausreichende mechanische Festigkeit auf, um den entsprechende Segmentflächenabschnitt 19 an der Trägerplatte 15 lagefixiert zu halten. Dabei kann auch vorgesehen sein, dass der entsprechende Segmentflächenabschnitt 19 des wenigstens einen Segments 17 mittels der zumindest einen Vakuumleitung 22 monolithisch mit der Trägerplatte 15 ausgebildet ist. Hierbei sind also der Segmentflächenabschnitt 19, die wenigstens eine Vakuumleitung 22 sowie die Trägerplatte 15 mittels eines additiven Fertigungsverfahrens einstückig hergestellt.

Auch kann vorgesehen sein, dass der entsprechende Segmentflächenabschnitt 19 des wenigstens einen Segments 17 mittels der zumindest einen Vakuumleitung 22 monolithisch mit der Trägerplatte 15 ausgebildet ist und das entsprechende Vakuumhaltergehäuse 36.1, 36.2 mittels der zumindest Vakuumleitung 21.1, 21.2 monolithisch mit der Trägerplatte 15 ausgebildet ist. Hierbei ist dann also der Segmentflächenabschnitt 19, die wenigstens eine Vakuumleitung 22, das entsprechende Vakuumhaltergehäuse 36.1, 36.2, die zugehörige wenigstens eine Vakuumleitung 21.1, 21.2 sowie die Trägerplatte 15 mittels eines additiven Fertigungsverfahrens einstückig hergestellt (Siehe Figur 3).

Das dem jeweiligen Segment 17 zugeordnete Vakuumhalterpaar 9 weist dabei an dem vorderen und hinteren Vakuumhalter 9.1, 9.2 ein leistenartiges und in seiner Längserstreckung parallel zur Trommelachse TA der Vakuumtrommel 6 orientiertes Vakuumpad 35.1, 35.2 mit mehreren Vakuumöffnungen 10 auf (nur schematisch dargestellt in der Figur 2), an dem jeweils über die Vakuumöffnungen 10 das vordere und rückwärtige Etikettenende 3.1, 3.2 eines Etiketts 3 ansaugbar ist. Insbesondere ist an dem vorderen Vakuumhalter 9.1 ein vorderes Vakuumpad 35.1 vorgesehen und an dem hinteren Vakuumhalter 9.2 ein hinteres Vakuumpad 35.2 vorgesehen. Das vordere und hintere Vakuumpad 35.1, 35.2 ist dabei jeweils hermetisch dicht an einem entsprechenden vorderen und hinteren Vakuumhaltergehäuse 36.1, 36.2 des entsprechenden vorderen bzw. hinteren Vakuumhalters 9.1, 9.2 befestigt, beispielsweise in das Vakuumhaltergehäuse 36.1, 36.2 hermetisch dicht eingeschoben, und zwar derart, dass die an dem jeweiligen Vakuumpad 35.1, 35.2 vorgesehenen Vakuumöffnungen 10 über die an dem Vakuumhaltergehäuse 36.1, 36.2 jeweils angeordneten Vakuumleitungen 21.1, 21.2 über eine nicht dargestellte Drehverbindung mit der ebenfalls nicht dargestellten zentralen Ansaugeinrichtung, insbesondere einer zentralen Vakuumerzeugungseinrichtung, verbindbar sind.

In dem jeweiligen Segmentflächenabschnitt 19 eines entsprechenden Segmentes 17 können dabei mehrere Ansaugöffnungen 20 für Luft in Form von Unterdruck ausgebildet sein. Radial hinter diesen Ansaugöffnungen 20, also auf der der Trommelachse TA zugewandten Seite des Segmentflächenabschnittes 19, ist die jeweilige Ansaugöffnung 20 mit einer entsprechenden Vakuumleitung 22 verbunden. Die einzelnen Vakuumleitungen 22 können ebenfalls über eine nicht dargestellte Drehverbindung mit einer ebenfalls nicht dargestellten zentralen Ansaugeinrichtung, insbesondere einer zentralen Vakuumerzeugungseinrichtung, verbunden sein. Durch einen derartigen Aufbau kann damit sowohl an den Vakuumöffnungen 10 der Vakuumpads 35.1, 35.2, als auch den Ansaugöffnungen 20 des Segmentflächenabschnittes 19 ein Unterdruck zum Ansaugen und damit Halten der Etiketten 3 erzeugt werden.

Zudem kann vorgesehen sein, dass die Trägerplatte 15 in zumindest einem teilringförmigen Flächenabschnitt 15.1, beispielsweise in zwei sich teilkonzentrisch um die Trommelachse TA erstreckenden Flächenabschnitten 15.1, aus einem gegenüber der restlichen Trägerplatte 15 elastischeren Material mittels eines additiven Fertigungsverfahrens herstellt ist. Die teilringförmigen Flächenabschnitte 15.1 können über die Oberfläche der restlichen Trägerplatte 15 treppenartig hervorspringen. Die solcherart ausgebildeten Flächenabschnitte 15.1 können Anschraub- oder Klemmflächen ausbilden, um Fertigungstoleranzen auszugleichen.

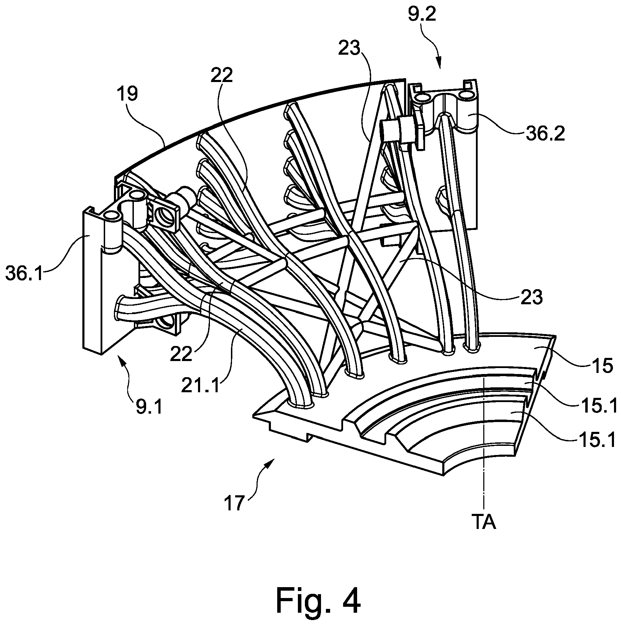

Wie aus der Figur 4 ersichtlich, kann dabei vorgesehen sein, dass zwischen zumindest zwei Vakuumkanälen 21.1, 21.2, 22 und/oder dem Segmentflächenabschnitt 19 und der Trägerplatte 15 und/oder zumindest einem Vakuumkanal 21.1, 21.2, 22 und der Trägerplatte 15 zumindest eine Verstrebung 23 vorgesehen ist, die mittels eines additiven Fertigungsverfahrens hergestellt sein kann.

Die Verstrebungen 23 bilden dabei eine Art Gerüst aus und erhöhen somit die mechanische Stabilität der Anbindung des vorderen und/oder hinteren Vakuumgehäuses 36.1, 36.2 und/oder des Segmentflächenabschnittes 19 an der Trägerplatte 15 sowie der Vakuumkanäle 21.1, 21.2, 22 untereinander.

Mehr im Detail können die Verstrebungen 23 insbesondere als Querstreben ausgebildet sein, die sich zwischen dem Segmentflächenabschnitt 19 und der Trägerplatte 15 erstrecken. Insbesondere kann dabei vorgesehen sein, dass die als Querstrebe ausgebildete Verstrebung 23 sich zwischen einem dem vorderen Vakuumgehäuse 36.1 zugewandten Abschnitt des Segmentflächenabschnittes 19 und einem dem hinteren Vakuumgehäuse 36.2 im Wesentlichen gegenüberliegenden Bereich der Trägerplatte 15 verläuft und vice versa - also quer zum Segmentflächenabschnitt 19 bzw. quer zu einer durch die Trägerplatte 15 aufgespannten Ebene verlaufen. Insbesondere sind die Verstrebungen 23 damit als zwischen dem vorderen und hinteren Vakuumgehäuse 36.1, 36.2 quer verlaufende Querstreben ausgebildet.

Auch kann vorgesehen sein, dass die Verbindungsstreben 23 sich horizontal - und damit im Wesentlichen parallel zu der durch die Trägerplatte 15 aufgespannten Ebene - zwischen zwei benachbarten Vakuumkanälen 21.1, 21.2, 22 verstrecken. Dabei können mehrere Verbindungstreben 23, die untereinander im Wesentlichen parallel zueinander sowie parallel zu der durch die Trägerplatte 15 aufgespannten Ebene vorgesehen sein.

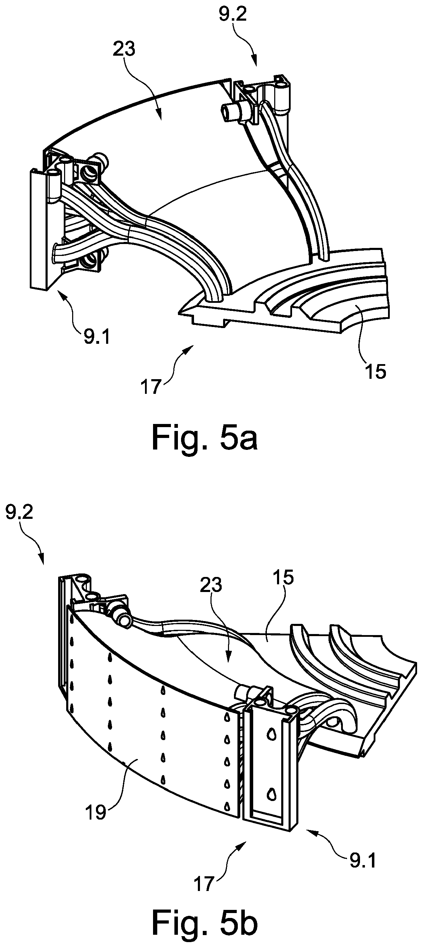

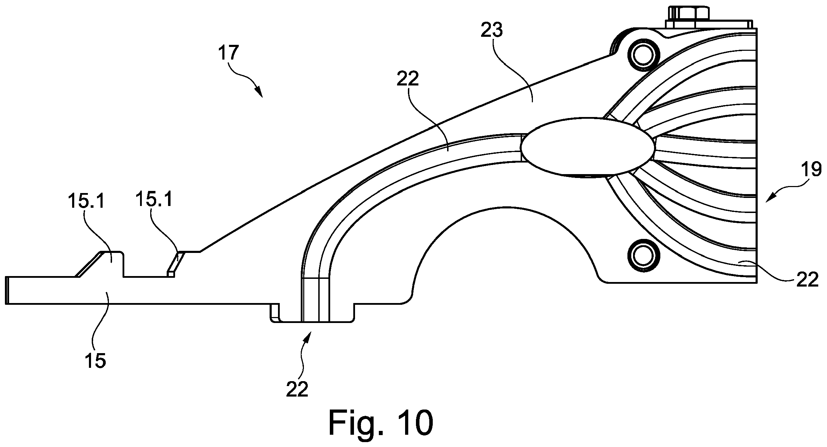

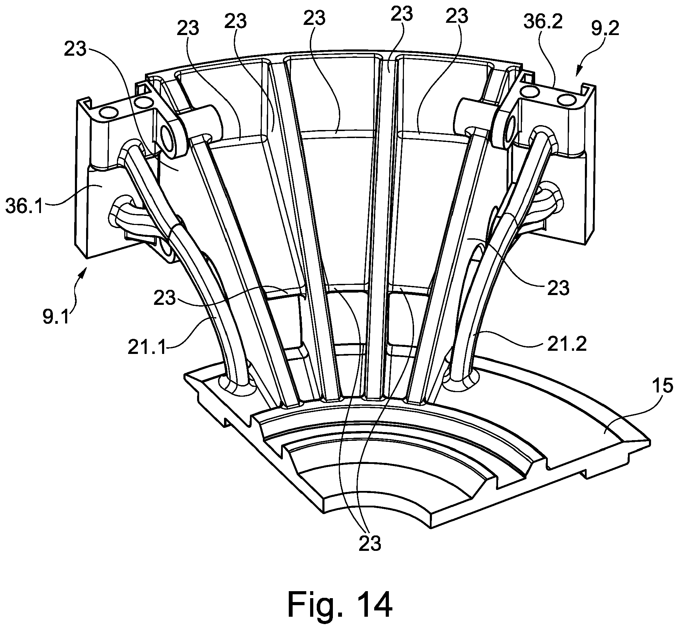

Wie aus den Figuren 5a und 5b sowie dem Schnitt der Figur 10 ersichtlich, kann dabei vorgesehen sein, dass zumindest die Vakuumkanäle 22 in die Verstrebung 23 integriert sind. Beispielsweise kann zumindest ein Vakuumkanal 22 in die als Mantelflächenabschnitt ausgebildete Verstrebung 23 integriert sein. Die als Mantelflächenabschnitt vorgesehene Verstrebung 23 erstreckt sich dabei vorteilhaft entlang der gesamten Bogenlänge, die durch den kreisbogenförmigen Segmentflächenabschnitt 19 ausgebildet ist, also insbesondere zwischen dem jeweiligen vorderen und hinteren Vakuumhalter 9.1, 9.2. Alternativ kann auch vorgesehen sein, dass in zumindest eine vertikal verlaufende Verstrebung 23 (wie in Figur 10 oder 14 dargestellt) zumindest ein Vakuumkanal 22 integriert ist.

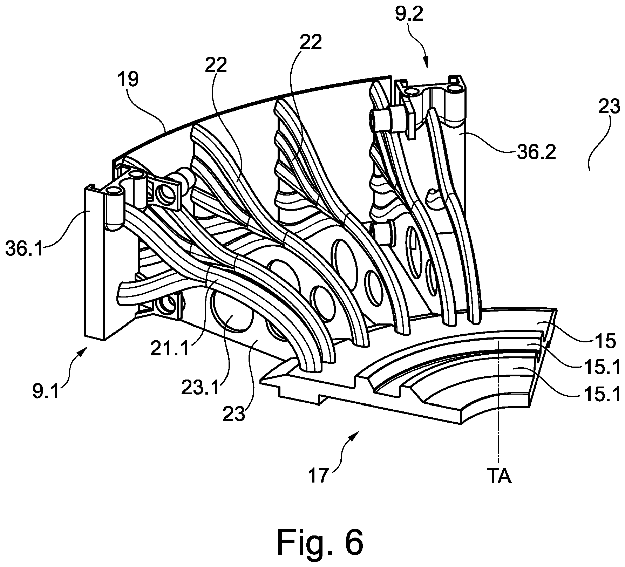

Wie aus der Figur 6 ersichtlich, kann dabei vorgesehen sein, dass entlang der Bogenlänge des kreisförmigen Segmentflächenabschnittes 19 mehrere vertikal ausgerichtete Verstrebung 23 vorgesehen sind, die eine Art Finne ausbilden. Dabei können die als Finnen ausbildeten Verstrebungen 23 Durchgangsöffnungen 23.1 vorsehen. Mehr im Detail können die vertikal verlaufenden Verstrebungen 23 sich jeweils zwischen dem Segmentflächenabschnitt 19 und der Trägerplatte 15 erstrecken und zwar jeweils lotrecht oder im Wesentlichen lotrecht zu der durch die Trägerplatte 15 aufgespannten Ebene, wie dies in der Ausführungsvariante der Figur 14 dargestellt ist.

Dabei können die vertikal verlaufenden Verstrebungen 23 jeweils parallel oder im Wesentlichen parallel untereinander sowie lotrecht zu den horizontal verlaufenden Verstrebungen 23 ausgebildet sein, so dass ein mechanisch stabiles Gerüst entsteht.

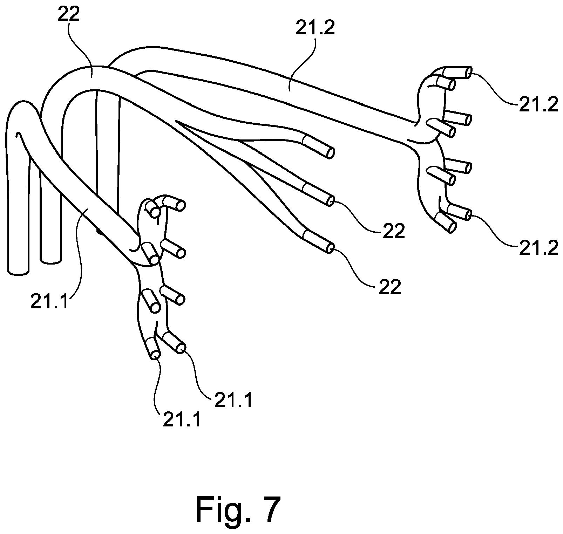

Wie insbesondere aus der Figur 7 ersichtlich, kann dabei vorgesehen sein, dass die zumindest eine Vakuumleitung 21.1, 21.2 zwischen der Trägerplatte 15 und dem zumindest einen Vakuumhaltergehäuse 36.1, 36.2 einen inneren Leitungsverlauf aufweist, bei dem sämtliche Kurvenabschnitte einen tangentialen Übergang ausbilden. Auch die zumindest eine Vakuumleitung 22 zwischen der Trägerplatte 15 und dem sich zwischen dem vorderen und hinteren Vakuumhalter 9.1, 9.2 dieses Vakuumhalterpaares 9 erstreckende Segmentflächenabschnitt 17 kann einen inneren Leitungsverlauf aufweisen, bei dem sämtliche Kurvenabschnitte einen tangentialen Übergang ausbilden. Unter tangentialen Übergangen wird vorliegend verstanden, dass abrupte Querschnittsverengungen oder plötzliche Durchmesseränderungen und damit ungünstige Winkel, insbesondere kantige Übergänge mit Winkel kleiner als 90°, vermieden sind. Durch die tangentialen Übergänge ist eine erhebliche Verbesserung der Strömungseigenschaften innerhalb der Vakuumleitung 21.1, 21.2, 22 erzielbar, wodurch eine Reduzierung der benötigten Leistung der zentralen Ansaugeinrichtung, insbesondere der zentralen Vakuumerzeugungseinrichtung, ermöglicht wird. Dies spart Betriebskosten sowie Bauraum.

In diesem Zusammenhang kann es vorteilhaft sein, wenn ein Innendurchmesser der jeweiligen Vakuumleitung 21.1, 21.2 oder 22 entlang des Leitungsverlauf derart eingestellt ist, dass an einem dem vorderen oder hinteren Vakuumhalter 9.1, 9.2 und/oder dem sich zwischen dem vorderen und hinteren Vakuumhalter 9.1, 9.2 dieses Vakuumhalterpaares 9 erstreckenden Segmentflächenabschnitt 17 zugewandten Ausgang - also an einem dem Vakuumhalter 9.1, 9.2 oder dem Segmentflächenabschnitt 19 zugewandten Ausgang der zumindest einen Vakuumleitung 21.1, 21.2 oder 22 ein identischer oder näherungsweise identischer Unterdruck anliegt. Vorteilhaft ist der Leitungsverlauf der jeweiligen Vakuumleitung 21.1, 21.2, 22 derart eingestellt, dass an sämtlichen Ausgängen aller Vakuumleitungen 21.1, 21.2, 22 ein identischer Unterdruck anliegt.

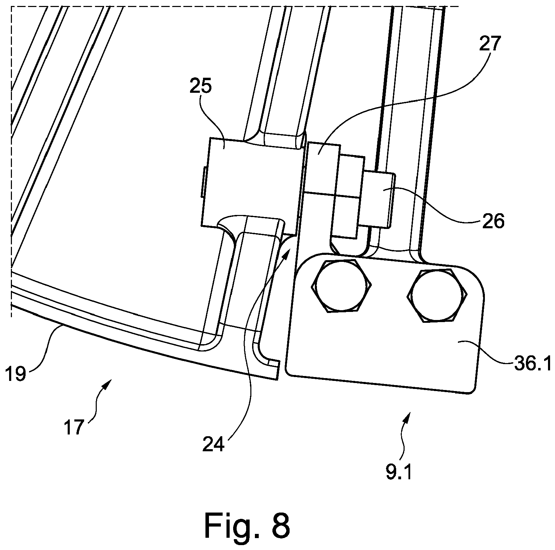

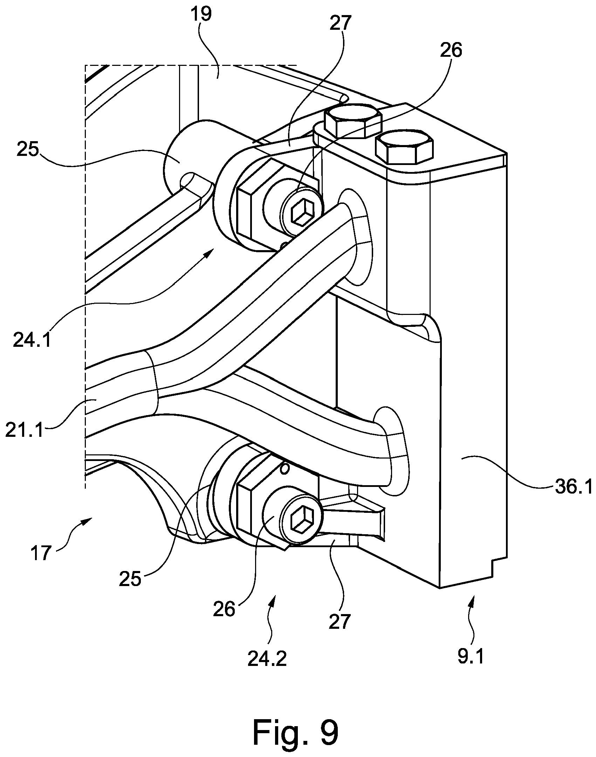

Wie aus den Figuren 8 und 9 ersichtlich, kann dabei auch vorgesehen sein, dass das zumindest eine Vakuumhaltergehäuse 36.1, 36.2 des Vakuumhalterpaares 9 eines Segments 17 mittels zumindest einer Verstelleinrichtung 24 an dem zu diesem Segment 17 gehörigen Segmentflächenabschnitt 19 verstellbar angeordnet ist. Insbesondere ist das Vakuumhaltergehäuse 36.1, 36.2 mittels der Verstelleinrichtung 24 relativ verstellbar zu dem Segmentflächenabschnitt 19 sowie zu der Trommelachse TA an dem Segmentflächenabschnitt 19 angeordnet. Vorteilhaft kann die Verstelleinrichtung 24 als Excenterverstelleinrichtung ausgebildet sein.

Hierfür sieht die als Excenter ausgebildete Verstelleinrichtung 24 an dem Segmentflächenabschnitt 19, insbesondere an dessen freiendseitigen, dem jeweiligen Vakuumhaltergehäuse 36.1, 36.2 zugewandten, Endbereich eine Excenteraufnahme 25 vor, in der eine drehbar gelagerte Steuerungsscheibe mit einer außerhalb des Mittelpunktes vorgesehenen Aufnahme für ein die Welle des Excenters ausbildendes Befestigungsmittel 26 integriert ist. Über das Befestigungsmittel 26 kann das jeweilige Vakuumgehäuse 36.1, 36.2 mit einem daran vorgesehenen Vakuumgehäusehalter 27 an der Excenteraufnahme 25 befestigt werden, und zwar vorzugsweise fest, jedoch lösbar. Das Befestigungsmittel 26 ist vorzugsweise als ein sich entlang der Welle erstreckendes Schraubverbindungsmittel ausgebildet. Wird nun das Befestigungsmittel 26 leicht gelöst, so kann deren Welle die in der Excenteraufnahme 25 rotierbar angeordnete Steuerungsscheibe drehen und damit die relative Positionierung des Vakuumhaltergehäuses 36.1, 36. 2 zu der Trommelachse TA bzw. dem Segmentflächenabschnitt 19 einstellen.

Um noch eine zusätzliche Verstellbarkeit zu erreichen, kann das jeweilige Vakuumhaltergehäuse 36.1, 36.2 des Vakuumhalterpaares 9 eines Segments 17 mittels zweier Verstelleinrichtungen 24, nämlich einer oberen und einer unteren Verstelleinrichtung 24.1, 24.2, an dem zu diesem Segment 17 gehörigen Segmentflächenabschnitt 19 verstellbar angeordnet sein. Die obere und untere Verstelleinrichtung 24.1, 24.2 sind dabei beabstandet an dem jeweiligen freiendseitigen Endbereich des Segmentflächenabschnittes 19 eines Segments vorgesehen. Vorteilhaft ist dabei sowohl die obere, als auch die untere Verstelleinrichtung 24.1, 24.2 jeweils als Excenterverstelleinrichtung ausgebildet.

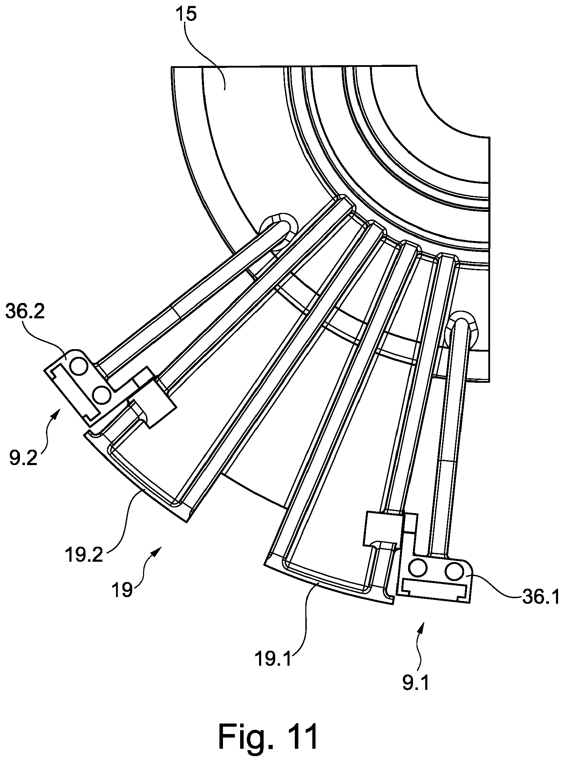

Eine nochmals weitere Ausführungsvariante zeigen dabei die Figuren 11 bis 13, in der der sich zwischen dem vorderen und hinteren Vakuumhalter 9.1, 9.2 eines Vakuumhalterpaares 9 erstreckende Segmentflächenabschnitt 19 mehrteilig, insbesondere zweiteilig ausgebildet ist und zumindest einen ersten sowie zweiten Teilsegmentflächenabschnitt 19.1, 19.2 aufweist. Dabei können auch die beiden Teilsegmentflächenabschnitte 19.1, 19.2 mittels eines additiven Fertigungsverfahrens herstellt werden, und zwar auch monolithisch, also einteilig, mit dem Träger 15 dieses Segments 17.

Dabei kann auch zwischen dem ersten und zweiten Teilsegmentflächenabschnitt 19.1, 19.2 ein Schlaufenschacht 28 vorgesehen sein, mittels dem die wirksame Kreissegmentbogenlänge des Segmentflächenabschnittes 19, an dem das Etikett 3 anliegt, veränderbar ist. Insbesondere weist der Schlaufenschacht 28 hierfür eine gegenüber dem ersten und zweiten Teilsegmentflächenabschnitt 19.1, 19.2 nach innen gewölbten, damit einen in Richtung der Trommelachse TA gerichteten, Flächenabschnitt 28.1 auf, so dass die wirksame Kreissegmentbogenlänge um die Wölbung des Flächenabschnittes 28.1 größer ist, als der wirksame Kreissegmentbogenlänge ohne Wölbung - also die auf einem gemeinsamen Radius zur Trommelachse TA liegende Kreissegmentbogenlänge der beiden Teilsegmentflächenabschnitte 19.1, 19.2. Auch der Schlaufenschacht 28 kann mittels einen additiven Fertigungsverfahrens hergestellt werden, und zwar vorzugsweise monolithisch, also einstückig, mit dem restlichen Segmentflächenabschnitt 19.

Dabei kann auch vorgesehen sein, dass der Flächenabschnitt 28.1 der Wölbung des Schlaufenschachtes 28 aus einem flexiblen, insbesondere elastisch verformbaren, Material herstellt ist, und zwar vorzugsweise ebenfalls mittels eines additiven Fertigungsverfahrens. Über eine Schraube 29 kann die Tiefe der Wölbung des Flächenabschnittes 28.1 und damit die wirksame Kreissegmentbogenlänge eingestellt, und damit verändert werden, indem der flexible Flächenabschnitt 28.1 mittels der Schraube 29 in Richtung der Trommelachse TA vorgespannt werden kann. Bei einem Herausdrehen der Schraube 29 bewegt sich der flexible Flächenabschnitt 28.1 aufgrund seiner elastischen Verformbarkeit wieder entgegen der Trommelachse TA gerichtet. Auf diese Art und Weise ist eine einfache Einstellbarkeit der wirksamen Kreissegmentbogenlänge hergestellt.

Dabei kann auch vorgesehen sein, dass mehrere Segmente 17 vorgesehen sind und sämtliche Segmente 17 zur Übergabe eines Etikettentyps einer bestimmten Etikettenlänge ausgebildet sind. Dabei können diese zusammengehörigen Segmente 17 für die Übergabe eines bestimmten Etikettentyps einer bestimmten für eine einfachere und bessere Widererkennung durch das Bedienpersonal eine identische Codierung, beispielsweise in Form einer gleichen Farbmarkierung, aufweisen. Insbesondere kann die Codierung mittels eines additiven Fertigungsverfahrens in das jeweilige Segment 17 eingebracht werden.

### Bezugszeichenliste

- 1: Etikettieraggregat
- 2: Behälter
- 3: Etikett
- 3a: Etikettenmaterial
- 3.1: vorderes Etikettenende
- 3.2: rückwärtiges Etikettenende
- 4: Vorratsrolle
- 5: Schneidwerk
- 6: Vakuumtrommel
- 7: Rotor
- 8: Drehteller
- 9: Vakuumhalterpaar
- 9.1: vorderer Vakuumhalter
- 9.2: hinterer Vakuumhalter
- 10: Vakuumöffnungen
- 11: Leimwerk
- 12: Schneidtrommel
- 15: Trägerplatte
- 15.1: Flächenabschnitt
- 16: Welle
- 17: Segment
- 18: Antriebseinrichtung
- 19: Segmentflächenabschnitt
- 19.1: erster Teilsegmentflächenabschnitt
- 19.2: zweiter Teilsegmentflächenabschnitt
- 20: Ansaugöffnungen
- 21.1, 21.2: Vakuumleitung
- 22: Vakuumleitung
- 23: Verstrebung
- 23.1: Durchgangsöffnung
- 24: Verstelleinrichtung
- 24.1: obere Verstelleinrichtung
- 24.2: untere Verstelleinrichtung
- 25: Excenteraufnahme
- 26: Befestigungsmittel
- 27: Vakuumgehäusehalter
- 28: Schlaufenschacht
- 28.1: Flächenabschnitt
- 29: Schraube

- 35.1: vorderes Vakuumpad
- 35.2: hinteres Vakuumpad
- 36.1: vorderes Vakuumgehäuse
- 36.2: hinteres Vakuumgehäuse
- 40: Grundträger

- A: Drehrichtung Rotor
- B: Drehrichtung Vakuumtrommel
- C: Drehrichtung Schneidtrommel
- TA: Trommelachse

## Patentansprüche

1. Vakuumtrommel für ein Etikettieraggregat einer Etikettiermaschine, insbesondere zum Etikettieren von Behälter (2) oder dergleichen, aufweisend mehrere in einer Drehrichtung (B) um eine Trommelachse (TA) der Vakuumtrommel (6) rotierbare Segmente (17) mit jeweils zumindest einem an einer entsprechenden Trägerplatte (15) angeordneten Vakuumhalterpaar (9), welches zumindest zwei an einer Umfangsfläche der Vakuumtrommel (9) um die Trommelachse (TA) in Drehrichtung (B) versetzt zueinander vorgesehene Vakuumhalter (9.1, 9.2) mit jeweils einem Vakuumhaltergehäuse (36.1, 36.2) umfasst, wobei ein bezogen auf die Drehrichtung (B) vorderer Vakuumhalter (9.1) zum Halten eines jeweiligen vorderen Etikettenendes (3.1) eines entsprechenden Etiketts (3) und ein bezogen auf die Drehrichtung (B) hinterer Vakuumhalter (9.2) zum Halten eines zugehörigen rückwärtigen Etikettenendes (3.2) an der Umfangsfläche der Vakuumtrommel (6) vorgesehen sind, und wobei die Umfangsfläche des entsprechenden Segments (17) der Vakuumtrommel (6) zwischen dem jeweiligen vorderen und hinteren Vakuumhalter (9.1, 9.2) durch einen kreisbogenförmigen Segmentflächenabschnitt (19) gebildet ist,
**dadurch gekennzeichnet,**
**dass** zumindest die Trägerplatte (15) und/oder das jeweilige Vakuumhaltergehäuse (36.1, 36.2) des Vakuumhalterpaares (9) und/oder der sich zwischen dem vorderen und hinteren Vakuumhalter (9.1, 9.2) dieses Vakuumhalterpaares (9) erstreckende Segmentflächenabschnitt (19) wenigstens eines Segmentes (17) mittels eines additiven Fertigungsverfahrens hergestellt ist und dass zumindest ein Vakuumhaltergehäuse (9.1, 9.2) des Vakuumhalterpaares (9) mittels zumindest einer Vakuumleitung (21.1, 21.2) an der Trägerplatte (15) angeordnet ist, wobei die zumindest eine Vakuumleitung (21.1, 21.2) mittels eines additiven Fertigungsverfahrens hergestellt ist.

2. Vakuumtrommel nach Anspruch 1, **dadurch gekennzeichnet, dass** das zumindest eine Vakuumhaltergehäuse (9.1, 9.2) des Vakuumhalterpaares (9) mittels der zumindest einen Vakuumleitung (21.1, 21.2) monolithisch mit der Trägerplatte (15) ausgebildet und an der Trägerplatte (15) lagefixiert gehalten ist.

3. Vakuumtrommel nach einem der vorhergehenden Ansprüche, **dadurch gekennzeichnet, dass** der sich zwischen dem vorderen und hinteren Vakuumhalter (9.1, 9.2) dieses Vakuumhalterpaares (9) erstreckende Segmentflächenabschnitt (19) des wenigstens einen Segments (17) mittels zumindest einer Vakuumleitung (22) an der Trägerplatte (15) angeordnet ist, wobei die zumindest eine Vakuumleitung (22) mittels eines additiven Fertigungsverfahrens hergestellt ist.

4. Vakuumtrommel nach Anspruch 3, **dadurch gekennzeichnet, dass** der sich zwischen dem vorderen und hinteren Vakuumhalter (9.1, 9.2) dieses Vakuumhalterpaares (9) erstreckende Segmentflächenabschnitt (19) des wenigstens einen Segments (17) mittels der zumindest einen Vakuumleitung (22) monolithisch mit der Trägerplatte (15) ausgebildet und an der Trägerplatte (15) lagefixiert gehalten ist.

5. Vakuumtrommel nach einem der vorhergehenden Ansprüche, **dadurch gekennzeichnet, dass** die zumindest eine Vakuumleitung (21.1, 21.2) zwischen der Trägerplatte (15) und dem zumindest einem Vakuumhaltergehäuse (36.1, 36.2) einen inneren Leitungsverlauf aufweist, bei dem sämtliche Kurvenabschnitte einen tangentialen Übergang ausbilden, und/oder die zumindest eine Vakuumleitung (22) zwischen der Trägerplatte (15) und dem sich zwischen dem vorderen und hinteren Vakuumhalter (9.1, 9.2) dieses Vakuumhalterpaares (9) erstreckenden Segmentflächenabschnitt (19) einen inneren Leitungsverlauf aufweist, bei dem sämtliche Kurvenabschnitte einen tangentialen Übergang ausbilden.

6. Vakuumtrommel nach einem der vorhergehenden Ansprüche, **dadurch gekennzeichnet, dass** ein Innendurchmesser der zumindest einen Vakuumleitung (21.1, 21.2, 22) entlang des Leitungsverlauf derart eingestellt ist, dass an einem, dem vorderen oder hinteren Vakuumhalter (9.1, 9.2) und/oder dem sich zwischen dem vorderen und hinteren Vakuumhalter (9.1, 9.2) dieses Vakuumhalterpaares (9) erstreckenden Segmentflächenabschnitt (19) zugewandten Ausgang der zumindest einen Vakuumleitung (21.1, 21.2, 22) ein identischer oder näherungsweise Unterdruck anliegt, vorzugsweise liegt an sämtlichen Ausgängen aller Vakuumleitungen (21.1, 21.2, 22) ein identischer Unterdruck an.

7. Vakuumtrommel nach einem der vorhergehenden Ansprüche, **dadurch gekennzeichnet, dass** zwischen zumindest zwei Vakuumkanälen (21.1, 21.2, 22) und/oder dem Segmentflächenabschnitt (19) und der Trägerplatte (15) und/oder zumindest einem Vakuumkanal (21.1, 21.2, 22) und der Trägerplatte (15) zumindest eine Verstrebung (23) vorgesehen ist, die mittels eines additiven Fertigungsverfahrens hergestellt ist.

8. Vakuumtrommel nach einem der vorhergehenden Ansprüche, **dadurch gekennzeichnet, dass** zwischen dem Segmentflächenabschnitt (19) und der Trägerplatte (15) zumindest eine vertikal zu einer durch die Trägerplatte (15) aufgespannten Ebene orientierte Verstrebung (23) vorgesehen ist, in die vorzugsweise zumindest ein Vakuumkanal (22) integriert ist.

9. Vakuumtrommel nach einem der vorhergehenden Ansprüche, **dadurch gekennzeichnet, dass** zumindest eine vertikale Verstrebung (23) als Finne ausgebildet ist.

10. Vakuumtrommel nach einem der vorhergehenden Ansprüche, **dadurch gekennzeichnet, dass** mehrere vertikal verlaufende Verstrebungen (23) vorgesehen sind, zwischen den sich zumindest eine horizontal und damit parallel zu der durch die Trägerplatte (15) ausgespannten Ebene verlaufende Verstrebung (23) erstreckt.

11. Vakuumtrommel nach einem der vorhergehenden Ansprüche, **dadurch gekennzeichnet, dass** die Vakuumkanäle (22) in eine als Mantelflächenabschnitt ausgebildete Verstrebung (23) integriert sind.

12. Vakuumtrommel nach einem der vorhergehenden Ansprüche, **dadurch gekennzeichnet, dass** das zumindest eine Vakuumhaltergehäuse (36.1, 36.2) des Vakuumhalterpaares (9) mittels zumindest einer Verstelleinrichtung (24) an dem sich zwischen dem vorderen und hinteren Vakuumhalter (9.1, 9.2) dieses Vakuumhalterpaares (9) erstreckenden Segmentflächenabschnitt (19) relativ zur Trommelachse (TA) verstellbar angeordnet ist.

13. Vakuumtrommel nach einem der vorhergehenden Ansprüche, **dadurch gekennzeichnet, dass** der sich zwischen dem vorderen und hinteren Vakuumhalter (9.1, 9.2) dieses Vakuumhalterpaares (9) erstreckende Segmentflächenabschnitt (19) mehrteilig, insbesondere zweiteilig ausgebildet ist und zumindest einen ersten sowie zweiten Teilsegmentflächenabschnitt (19.1, 19.2) aufweist.

14. Vakuumtrommel nach Anspruch 13, **dadurch gekennzeichnet, dass** zwischen dem ersten und zweiten Teilsegmentflächenabschnitt (19.1, 19.2) ein Schlaufenschacht (28) vorgesehen ist, mittels dem die wirksame Kreissegmentbogenlänge des Segmentflächenabschnittes (19) veränderbar ist.

15. Verfahren zur Herstellung einer Vakuumtrommel, bei dem mehrere in einer Drehrichtung (B) um eine Trommelachse (TA) der Vakuumtrommel (6) rotierbare Segmente (17) mit jeweils zumindest einem an einer entsprechenden Trägerplatte (15) angeordneten Vakuumhalterpaar (9) vorgesehen werden, welches zumindest zwei an einer Umfangsfläche der Vakuumtrommel (6) um die Trommelachse (TA) in Drehrichtung (B) versetzt zueinander vorgesehene Vakuumhalter (9.1, 9.2) mit jeweils einem Vakuumhaltergehäuse (36.1, 36.2) umfasst, wobei ein bezogen auf die Drehrichtung (B) vorderer Vakuumhalter (9.1) zum Halten eines jeweiligen vorderen Etikettenendes (3.1) eines entsprechenden Etiketts (3) und ein bezogen auf die Drehrichtung (B) hinterer Vakuumhalter (9.2) zum Halten eines zugehörigen rückwärtigen Etikettenendes (3.2) an der Umfangsfläche der Vakuumtrommel (6) vorgesehen wird, und wobei die Umfangsfläche des entsprechenden Segments (17) der Vakuumtrommel (6) zwischen dem jeweiligen vorderen und hinteren Vakuumhalter (9.1, 9.2) durch einen kreisbogenförmigen Segmentflächenabschnitt (19) gebildet wird, **dadurch gekennzeichnet, dass** zumindest eine Trägerplatte (15) und/oder ein jeweiliges Vakuumhaltergehäuse (36.1, 36.2) eines Vakuumhalterpaares (9) und/oder ein sich zwischen dem vorderen und hinteren Vakuumhalter (9.1, 9.2) dieses Vakuumhalterpaares (9) erstreckender Segmentflächenabschnitt (19) wenigstens eines Segmentes (17) mittels eines additiven Fertigungsverfahrens hergestellt wird und dass zumindest ein Vakuumhaltergehäuse (36.1, 36.2) des Vakuumhalterpaares (9) mittels zumindest einer Vakuumleitung (21.1, 21.2) an der Trägerplatte (15) angeordnet wird, wobei die zumindest eine Vakuumleitung (21.1, 21.2) mittels eines additiven Fertigungsverfahrens hergestellt wird.

16. Verfahren zur Herstellung einer Vakuumtrommel nach Anspruch 15, **dadurch gekennzeichnet, dass** zwischen zumindest zwei Vakuumkanälen (21.1, 21.2, 22) und/oder dem Segmentflächenabschnitt (19) und der Trägerplatte (15) und/oder zumindest einem Vakuumkanal (21.1, 21.2, 22) und der Trägerplatte (15) zumindest eine Verstrebung (23) mittels eines additiven Fertigungsverfahrens hergestellt wird.

17. Verfahren zur Herstellung einer Vakuumtrommel nach Anspruch 15 oder 16, **dadurch gekennzeichnet, dass** zwischen dem Segmentflächenabschnitt (19) und der Trägerplatte (15) zumindest eine vertikal zu einer durch die Trägerplatte (15) aufgespannten Ebene orientierte Verstrebung (23) mittels eines additiven Fertigungsverfahrens hergestellt wird, in die vorzugsweise zumindest ein Vakuumkanal (22) integriert wird.

18. Verfahren zur Herstellung einer Vakuumtrommel nach einem der vorhergehenden Ansprüche 15 bis 17, **dadurch gekennzeichnet, dass** zumindest eine Verstrebung (23) als Finne hergestellt wird.

19. Verfahren zur Herstellung einer Vakuumtrommel nach einem der vorhergehenden Ansprüche 15 bis 18, **dadurch gekennzeichnet, dass** mehrere vertikal verlaufende Verstrebungen (23) vorgesehen sind, zwischen den sich zumindest eine horizontal und damit parallel zu der durch die Trägerplatte (15) ausgespannten Ebene verlaufende Verstrebung (23) erstreckt.

20. Verfahren zur Herstellung einer Vakuumtrommel nach einem der vorhergehenden Ansprüche 15 bis 19, **dadurch gekennzeichnet, dass** die Vakuumkanäle (22) in eine als Mantelflächenabschnitt ausgebildete Verstrebung (23) integriert hergestellt werden.

21. Verfahren zur Herstellung einer Vakuumtrommel nach einem der vorhergehenden Ansprüche 15 bis 20, **dadurch gekennzeichnet, dass** der sich zwischen dem vorderen und hinteren Vakuumhalter (9.1, 9.2) dieses Vakuumhalterpaares (9) erstreckende Segmentflächenabschnitt (19) mehrteilig, insbesondere zweiteilig, ausgebildet wird und zumindest einen ersten sowie zweiten Teilsegmentflächenabschnitt (19.1, 19.2) aufweist.

22. Verfahren zur Herstellung einer Vakuumtrommel nach Anspruch 21, **dadurch gekennzeichnet, dass** zwischen dem ersten und zweiten Teilsegmentflächenabschnitt (19.1, 19.2) ein Schlaufenschacht (28) ausgebildet wird, mittels dem die wirksame Kreissegmentbogenlänge des Segmentflächenabschnittes (19) verändert wird.

## Claims

1. Vacuum drum for a labelling unit of a labelling machine, in particular for labelling containers (2) or the like, comprising a plurality of segments (17) which are rotatable in a direction of rotation (B) about a drum axis (TA) of the vacuum drum (6), and which each have at least one pair of vacuum holders (9) which are arranged on a corresponding carrier plate (15) and which comprise vacuum holders (9.1, 9.2) which are provided offset in relation to one another at a circumferential surface of the vacuum drum (9) about the drum axis (TA) in the direction of rotation (B), each with a vacuum holder housing (36.1, 36.2), wherein a front vacuum holder (9.1), in relation to the direction of rotation (B), is provided in order to hold in each case a front label end (3.1) of a corresponding label (3), and a rear vacuum holder (9.2), in relation to the direction of rotation (B), is provided for holding an associated rear label end (3.2) at the circumferential surface of the vacuum drum (6), and wherein the circumferential surface of the corresponding segment (17) of the vacuum drum (6) is formed between the respective front and rear vacuum holders (9.1, 9.2) by means of a circular-arc shaped segment surface portion (19),
**characterised in that**
at least the carrier plate (15) and/or the respective vacuum holder housing (36.1, 36.2) of the vacuum holder pair (9) and/or the segment surface portion (19) extending between the front and rear vacuum holders (9.1, 9.2) of this pair of vacuum holders (9) of at least one segment (17) is/are produced by means of an additive manufacturing method, and that at least one vacuum holder housing (9.1, 9.2) of the pair of vacuum holders (9) is arranged on the carrier plate (15) by means of at least one vacuum line (21.1, 21.2), wherein the at least one vacuum line (21.1, 21.2) is produced by means of an additive manufacturing process.

2. Vacuum drum according to claim 1, **characterised in that** the at least one vacuum holder housing (9.1, 9.2) of the pair of vacuum holders (9) is formed as monolithic with the carrier plate (15) by means of the at least one vacuum line (21.1, 21.2), and is held in a fixed position on the carrier plate (15).

3. Vacuum drum according to any one of the preceding claims, **characterised in that** the segment surface portion (19) of the at least one segment (17) extending between the front and rear vacuum holders (9.1, 9.2) of this pair of vacuum holders (9) is arranged on the carrier plate (15) by means of at least one vacuum line (22), wherein the vacuum line (22) is produced by means of an additive manufacturing method.

4. Vacuum drum according to claim 3, **characterised in that** the segment surface portion (19) of the at least one segment (17) extending between the front and rear vacuum holders (9.1, 9.2) of this pair of vacuum holders (9) is formed as monolithic with the carrier plate (15) by means of the at least one vacuum line (22), and is held in a fixed position on the carrier plate (15).

5. Vacuum drum according to any one of the preceding claims, **characterised in that** the at least one vacuum line (21.1, 21.2) has an internal line path between the carrier plate (15) and the at least one vacuum holder housing (36.1, 36.2), wherein all the curve portions form a tangential transition region, and/or the at least one vacuum line (22) has an internal line path between the carrier plate (15) and the segment surface portion (19) extending between the front and rear vacuum holders (9.1, 9.2) of this pair of vacuum holders (9), wherein all the curve portions form a tangential transition region

6. Vacuum drum according to any one of the preceding claims, **characterised in that** an inner diameter of the at least one vacuum line (21.1, 21.2, 22) is configured along the path of the line in such a way that, at an outlet of the at least one vacuum line (21.1, 21.2, 22), facing towards the front or rear vacuum holders (9.1, 9.2) and/or the vacuum holder (9.1, 9.2) of this pair of vacuum holders (9) and/or the segment surface portion (19) extending between the front or rear vacuum holders (9.1, 9.2), is subject to an identical or approximately the same negative pressure, and preferably an identical negative pressure is imposed at all the outlets of all the vacuum lines (21.1, 21.2, 22).

7. Vacuum drum according to any one of the preceding claims, **characterised in that** at least one bracing element (23), produced by means of an additive manufacturing method, is provided between at least two vacuum channels (21.1, 21.2, 22) and/or the segment surface portion (19) and the carrier plate (15), and/or between at least one vacuum channel (21.1, 21.2, 22) and the carrier plate (15).

8. Vacuum drum according to any one of the preceding claims, **characterised in that** at least one bracing element (23), oriented vertically to a plane spanning through the carrier plate (15), is provided between the segment surface portion (19) and the carrier plate (15), integrated into which is preferably at least one vacuum channel (22).

9. Vacuum drum according to any one of the preceding claims, **characterised in that** at least one vertical bracing element (23) is configured as a fin.

10. Vacuum drum according to any one of the preceding claims, **characterised in that** a plurality of bracing elements (23) running vertically are provided, extending between which is at least one bracing element (23), running horizontally and therefore parallel to the plane spanning through the carrier plate (15).

11. Vacuum drum according to any one of the preceding claims, **characterised in that** the vacuum channels (22) are integrated into a bracing element (23) which is configured as a casing surface portion.

12. Vacuum drum according to any one of the preceding claims, **characterised in that** the at least one vacuum holder housing (36.1, 36.2) of the pair of vacuum holders (9) is arranged in an adjustable manner in relation to the drum axis (TA), by means of at least one adjustment device (24) at the segment surface portion (19) extending between the front and rear vacuum holders (9.1, 9.2) of this pair of vacuum holders (9).

13. Vacuum drum according to any one of the preceding claims, **characterised in that** the segment surface portion (19) extending between the front and rear vacuum holders (9.1, 9.2) of this pair of vacuum holders (9) is formed as multiple parts, in particular as two parts, and comprises at least one first and one second part segment surface portions (19.1, 19.2).

14. Vacuum drum according to claim 13, **characterised in that** a loop shaft (28) is provided between the first and second part segment surface portions (19.1, 19.2), by means of which the effective circular segment arc length of the segment surface portion (19) can be changed.

15. Method for producing a vacuum drum, wherein a plurality of segments (17), which can be rotated in a direction of rotation (B) about a drum axis (TA) of the vacuum drum (6), are each provided with at least one pair of vacuum holders (9), arranged on a corresponding carrier plate (15), comprising at least two vacuum holders (9.1, 9.2), each with a vacuum holder housing (36.1, 36.2), provided offset in relation to one another at a circumferential surface of the vacuum drum (6) in the direction of rotation (B) about the drum axis (TA), wherein a front vacuum holder (9.1), in relation to the direction of rotation (B), is provided in order to hold a respective front label end (3.1) of a corresponding label (3), and a rear vacuum holder (9.2), in relation to the direction of rotation (B), is provided in order to hold an associated rear label end (3.2) at the circumferential surface of the vacuum drum (6), and wherein the circumferential surface of the corresponding segment (17) of the vacuum drum (6) is formed between the respective front and rear vacuum holders (9.1, 9.2) by means of a circular-arc shaped segment surface portion (19), **characterised in that** at least one carrier plate (15) and/or a respective vacuum holder housing (36.1, 36.2) of a pair of vacuum holders (9) and/or a segment surface portion (19) of at least one segment (17), extending between the front and rear vacuum holders (9.1, 9.2) of this pair of vacuum holders (9), is/are produced by means of an additive manufacturing process, and that at least one vacuum holder housing (36.1, 36.2) of the pair of vacuum holders (9) is arranged on the carrier plate (15) by means of at least one vacuum line (21.1, 21.2), wherein the at least one vacuum line (21.1, 21.2) is produced by means of an additive manufacturing process.

16. Method for producing a vacuum drum according to claim 15, **characterised in that** at least one bracing element (23), produced by means of an additive manufacturing process, is arranged between at least two vacuum channels (21.1, 21.2, 22) and/or the segment surface portion (19) and the carrier plate (15) and/or at least one vacuum channel (21.1, 21.2, 22) and the carrier plate (15).

17. Method for producing a vacuum drum according to claim 15 or 16, **characterised in that** at least one bracing element (23), produced by means of an additive manufacturing process, is arranged between the segment surface portion (19) and the carrier plate (15), oriented vertically to a plane spanning through the carrier plate (15), into which at least one vacuum channel (22) is integrated.

18. Method for producing a vacuum drum according to any one of the preceding claims 15 to 17, **characterised in that** at least one bracing element (23) is produced as a fin.

19. Method for producing a vacuum drum according to any one of the preceding claims 15 to 18, **characterised in that** a plurality of bracing elements (23) running vertically are provided, between which at least one bracing element extends horizontally and therefore parallel to the plane spanning through the carrier plate (15).

20. Method for producing a vacuum drum according to any one of the preceding claims 15 to 19, **characterised in that** the vacuum channels (22) are produced as integrated into a bracing element (23) formed as a casing surface portion.

21. Method for producing a vacuum drum according to any one of the preceding claims 15 to 20, **characterised in that** the segment (19) extending between the front and rear vacuum holders (9.1, 9.2) of this pair of vacuum holders (9) is configured as being of multiple parts, in particular two parts, and comprises at least one first and one second part segment surface portion (19.1, 19.2).

22. Method for producing a vacuum drum according to claim 21, **characterised in that** a loop shaft (28) is formed between the first and second part segment surface portions (19.1, 19.2), by means of which the effective circular segment arc length of the segment surface portion (19) can be changed.

## Revendications

1. Tambour sous vide pour une unité d'étiquetage d'une machine d'étiquetage, en particulier pour étiqueter des contenants (2) ou similaire, présentant plusieurs segments (17) pouvant tourner autour d'un axe de tambour (TA) du tambour sous vide (6) dans une direction de rotation (B), avec respectivement au moins une paire d'éléments de retenue sous vide (9) disposée sur une plaque de support (15) correspondante, laquelle comprend au moins deux éléments de retenue sous vide (9.1, 9.2) prévus de manière décalée l'un par rapport à l'autre dans la direction de rotation (B) autour de l'axe de tambour (TA) sur une surface périphérique du tambour sous vide (9), avec respectivement un boîtier d'élément de retenue sous vide (36.1, 36.2), dans lequel un élément de retenue sous vide avant (9.1) par rapport à la direction de rotation (B) est prévu pour retenir une extrémité d'étiquette avant (3.1) respective d'une étiquette (3) correspondante et un élément de retenue sous vide arrière (9.2) par rapport à la direction de rotation (B) est prévu pour retenir une extrémité d'étiquette arrière (3.2) associée sur la surface périphérique du tambour sous vide (6), et dans lequel la surface périphérique du segment (17) correspondant du tambour sous vide (6) entre l'élément de retenue sous vide avant et l'élément de retenue sous vide arrière (9.1, 9.2) respectif est formée par une section de surface de segment (19) en forme d'arc de cercle,
**caractérisé en ce**
**qu'**au moins la plaque de support (15) et/ou le boîtier d'élément de retenue sous vide (36.1, 36.2) de la paire d'éléments de retenue sous vide (9) et/ou la section de surface de segment (19) d'au moins un segment (17) s'étendant entre l'élément de retenue sous vide avant et l'élément de retenue sous vide arrière (9.1, 9.2) de ladite paire d'éléments de retenue sous vide (9) sont fabriqués à partir d'un procédé de fabrication additive et que l'au moins un boîtier d'élément de retenue sous vide (9.1, 9.2) de la paire d'éléments de retenue sous vide (9) est disposé sur la plaque de support (15) au moyen d'au moins un conduit sous vide (21.1, 21.2), dans lequel l'au moins une conduite sous vide (21.1, 21.2) est fabriquée au moyen d'un procédé de fabrication additive.

2. Tambour sous vide selon la revendication 1, **caractérisé en ce que** l'au moins un boîtier d'élément de retenue sous vide (9.1, 9.2) de la paire d'éléments de retenue sous vide (9) est réalisé de manière monolithique avec la plaque de support (15) au moyen de l'au moins une conduite sous vide (21.1, 21.2) et est maintenu de manière fixée en position sur la plaque de support (15).

3. Tambour sous vide selon l'une quelconque des revendications précédentes, **caractérisé en ce que** la section de surface de segment (19) de l'au moins un segment (17) s'étendant entre l'élément de retenue sous vide avant et l'élément de retenue sous vide arrière (9.1, 9.2) de ladite paire d'éléments de retenue sous vide (9) est disposée sur la plaque de support (15) au moyen d'au moins une conduite sous vide (22), dans lequel l'au moins une conduite sous vide (22) est fabriquée au moyen d'un procédé de fabrication additive.

4. Tambour sous vide selon la revendication 3, **caractérisé en ce que** la section de surface de segment (19) de l'au moins un segment (17) s'étendant entre l'élément de retenue sous vide avant et l'élément de retenue sous vide arrière (9.1, 9.2) de ladite paire d'éléments de retenue sous vide (9) est réalisée de manière monolithique avec la plaque de support (15) au moyen de l'au moins une conduite sous vide (22) et est retenue de manière fixe en position sur la plaque de support (15).

5. Tambour sous vide selon l'une quelconque des revendications précédentes, **caractérisé en ce que** l'au moins une conduite sous vide (21.1, 21.2) présente entre la plaque de support (15) et l'au moins un boîtier d'élément de retenue sous vide (36.1, 36.2) un profil de conduite intérieur, pour lequel toutes les sections de courbe réalisent une transition tangentielle, et/ou l'au moins une conduite sous vide (22) entre la plaque de support (15) et la section de surface de segment (19) s'étendant entre l'élément de retenue sous vide avant et l'élément de retenue sous vide arrière (9.1, 9.2) de ladite paire d'éléments de retenue sous vide (9) un profil de conduite intérieur, pour lequel toutes les sections de courbe réalisent une transition tangentielle.

6. Tambour sous vide selon l'une quelconque des revendications précédentes, **caractérisé en ce qu'**un diamètre intérieur de l'au moins une conduite sous vide (21.1, 21.2, 22) est réglé de telle manière le long du profil de conduite qu'une dépression identique ou approximative est appliquée sur une sortie de l'au moins une conduite sous vide (21.1, 21.2, 22) tournée vers l'élément de retenue sous vide avant ou arrière (9.1, 9.2) et/ou vers la section de surface de segment (19) s'étendant entre l'élément de retenue sous vide avant et l'élément de retenue sous vide arrière (9.1, 9.2) de ladite paire d'éléments de retenue sous vide (9), de préférence une dépression identique est appliquée sur toutes les sorties de toutes les conduites sous vide (21.1, 21.2, 22).

7. Tambour sous vide selon l'une quelconque des revendications précédentes, **caractérisé en ce qu'**est prévu entre au moins deux canaux sous vide (21.1, 21.2, 22), et/ou la section de surface de segment (19) et la plaque de support (15) et/ou au moins un canal sous vide (21.1, 21.2, 22) et la plaque de support (15) au moins un entretoisement (23), qui est fabriqué au moyen d'un procédé de fabrication additive.

8. Tambour sous vide selon l'une quelconque des revendications précédentes, **caractérisé en ce qu'**est prévu entre la section de surface de segment (19) et la plaque de support (15) au moins un entretoisement (23) orienté de manière verticale par rapport à un plan formé par la plaque de support (15), dans lequel de préférence au moins un canal sous vide (22) est intégré.

9. Tambour sous vide selon l'une quelconque des revendications précédentes, **caractérisé en ce qu'**au moins un entretoisement (23) vertical est réalisé en tant que panne.

10. Tambour sous vide selon l'une quelconque des revendications précédentes, **caractérisé en ce que** plusieurs entretoisements (23) s'étendant de manière verticale sont prévus, entre lesquels s'étend au moins un entretoisement (23) s'étendant de manière horizontale et ainsi de manière parallèle par rapport au plan formé par la plaque de support (15).

11. Tambour sous vide selon l'une quelconque des revendications précédentes, **caractérisé en ce que** les canaux sous vide (22) sont intégrés dans un entretoisement (23) réalisé en tant que section de surface enveloppante.

12. Tambour sous vide selon l'une quelconque des revendications précédentes, **caractérisé en ce que** l'au moins un boîtier d'élément de retenue sous vide (36.1, 36.2) de la paire d'éléments de retenue sous vide (9) est disposé de manière à pouvoir être ajusté par rapport à l'axe de tambour (TA) sur la section de surface de segment (19) s'étendant entre l'élément de retenue sous vide avant et l'élément de retenue sous vide arrière (9.1, 9.2) de ladite paire d'éléments de retenue sous vide (9) au moyen d'au moins un système d'ajustement (24).

13. Tambour sous vide selon l'une quelconque des revendications précédentes, **caractérisé en ce que** la section de surface de segment (19) s'étendant entre l'élément de retenue sous vide avant et l'élément de retenue sous vide arrière (9.1, 9.2) de ladite paire d'éléments de retenue sous vide (9) est réalisée en plusieurs parties, en particulier en deux parties et présente au moins une première et une deuxième section de surface de segment partielle (19.1, 19.2).

14. Tambour sous vide selon la revendication 13, **caractérisé en ce qu'**est prévu entre la première et la deuxième section de surface de segment partielle (19.1, 19.2) un compartiment de boucles (28), au moyen duquel la longueur active d'arc de segment de cercle de la section de surface de segment (19) peut être modifiée.

15. Procédé de fabrication d'un tambour sous vide, dans lequel sont prévus plusieurs segments (17) pouvant tourner autour d'un axe de tambour (TA) du tambour sous vide (6) dans une direction de rotation (B), avec respectivement au moins une paire d'éléments de retenue sous vide (9) disposée sur une plaque de support (15) correspondante, laquelle comprend au moins deux éléments de retenue sous vide (9.1, 9.2) prévus de manière décalée l'un par rapport à l'autre dans la direction de rotation (B) autour de l'axe de tambour (TA) sur une surface périphérique du tambour sous vide (6), avec respectivement un boîtier d'élément de retenue sous vide (36.1, 36.2), dans lequel un élément de retenue sous vide avant (9.1) par rapport à la direction de rotation (B) est prévu pour retenir une extrémité d'étiquette avant (3.1) respective d'une étiquette (3) correspondante et un élément de retenue sous vide arrière (9.2) par rapport à la direction de rotation (B) est prévu pour retenir une extrémité d'étiquette arrière (3.2) associée sur la surface périphérique du tambour sous vide (6), et dans lequel la surface périphérique du segment (17) correspondant du tambour sous vide (6) est formée entre l'élément de retenue sous vide avant et l'élément de retenue sous vide arrière (9.1, 9.2) respectifs par une section de surface de segment (19) en forme d'arc de cercle, **caractérisé en ce qu'**au moins une plaque de support (15) et/ou un boîtier d'éléments de retenue sous vide (36.1, 36.2) respectif d'une paire d'éléments de retenue sous vide (9) et/ou une section de surface de segment (19) d'au moins un segment (17) s'étendant entre l'élément de retenue sous vide avant et l'élément de retenue sous vide arrière (9.1, 9.2) de ladite paire d'éléments de retenue sous vide (9) est fabriquée au moyen d'un procédé de fabrication additive, et qu'au moins un boîtier d'éléments de retenue sous vide (36.1, 36.2) de la paire d'éléments de retenue sous vide (9) est disposé sur la plaque de support (15) au moyen d'au moins une conduite sous vide (21.1, 21.2), dans lequel l'au moins une conduite sous vide (21.1, 21.2) est fabriquée au moyen d'un procédé de fabrication additive.

16. Procédé de fabrication d'un tambour sous vide selon la revendication 15, **caractérisé en ce qu'**au moins un entretoisement (23) est fabriqué au moyen d'un procédé de fabrication additive entre au moins deux canaux sous vide (21.1, 21.2, 22) et/ou la section de surface de segment (19) et la plaque de support (15) et/ou au moins un canal sous vide (21.1, 21.2, 22) et la plaque de support (15).

17. Procédé de fabrication d'un tambour sous vide selon la revendication 15 ou 16, **caractérisé en ce qu'**est fabriqué, entre la section de surface de segment (19) et la plaque de support (15), au moyen d'un procédé de fabrication additive, au moins un entretoisement (23) orienté de manière verticale par rapport à un plan formé par la plaque de support (15), dans lequel de préférence au moins un canal sous vide (22) est intégré.

18. Procédé de fabrication d'un tambour sous vide selon l'une quelconque des revendications 15 à 17, **caractérisé en ce qu'**au moins un entretoisement (23) est fabriqué en tant que panne.

19. Procédé de fabrication d'un tambour sous vide selon l'une quelconque des revendications précédentes 15 à 18, **caractérisé en ce que** sont prévus plusieurs entretoisements (23) s'étendant de manière verticale, entre lesquels s'étend au moins un entretoisement (23) s'étendant de manière horizontale et ainsi de manière parallèle par apport au plan formé par la plaque de support (15).

20. Procédé de fabrication d'un tambour sous vide selon l'une quelconque des revendications précédentes 15 à 19, **caractérisé en ce que** les canaux sous vide (22) sont fabriqués de manière intégrée dans un entretoisement (23) réalisé en tant que section de surface enveloppante.

21. Procédé de fabrication d'un tambour sous vide selon l'une quelconque des revendications précédentes 15 à 20, **caractérisé en ce que** la section de surface de segment (19) s'étendant entre l'élément de retenue sous vide avant et l'élément de retenue sous vide arrière (9.1, 9.2) de ladite paire d'éléments de retenue sous vide (9) est réalisée en plusieurs parties, en particulier en deux parties et présente au moins une première ainsi qu'une deuxième section de surface de segment partielle (19.1, 19.2).

22. Procédé de fabrication d'un tambour sous vide selon la revendication 21, **caractérisé en ce qu'**est réalisé entre la première et la deuxième section de surface de segment partielle (19.1, 19.2) un compartiment de boucles (28), au moyen duquel la longueur active d'arc de segment de cercle de la section de surface de segment (19) est modifiée.
